(19) Europäisches Patentamt / European Patent Office / Office européen des brevets

(11) **EP 4 215 937 A1**

(12) **EUROPEAN PATENT APPLICATION**

(43) Date of publication:
**26.07.2023  Bulletin 2023/30**

(21) Application number: **22153107.2**

(22) Date of filing: **25.01.2022**

(51) International Patent Classification (IPC):
**G01S 7/4915** (2020.01)    **G01S 17/894** (2020.01)

(52) Cooperative Patent Classification (CPC):
**G01S 7/4915; G01S 17/894**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Baden-Württemberg Stiftung gGmbH
70174 Stuttgart (DE)**

(72) Inventors:
• **MICHALZIK, Rainer
  89075 Ulm (DE)**
• **CLAUS, Daniel
  89081 Ulm (DE)**

(74) Representative: **Müller-Boré & Partner
Patentanwälte PartG mbB
Friedenheimer Brücke 21
80639 München (DE)**

(54) **DEVICE AND METHOD FOR DETERMINING A DISTANCE TO AN OBJECT**

(57)     The disclosure relates to a device, and method, for determining a distance to an object comprising: a modulation signal generation unit configured to generate a primary modulation signal; an emission unit configured to emit a light beam towards the object, wherein the emission unit is further configured to amplitude modulate the light beam so as to have an amplitude modulated optical signal power according to the primary modulation signal; a detection unit configured to receive at least part of the light beam scattered, diffracted, and/or reflected by the object; a modulation unit comprising: one or more first to fourth modulation sub-units, wherein each respective first to fourth modulation sub-unit is configured to convert one respective first to fourth part of the light beam into one converted respective first to fourth part of the light beam by additionally amplitude modulating an optical power of the respective first to fourth part according to a respective different first to fourth modulation signal; and a distance determination unit configured to determine a phase difference between the primary modulation signal and the detected optical signal power of each converted first part, converted second part, and converted third part, wherein the distance determination unit is configured to determine the distance to the object based on the determined phase difference.

Figure 1

EP 4 215 937 A1

**Description**

The disclosure concerns a device for determining a distance to an object, a detection device, and a method for determining a distance to an object.

The invention lies in the field of image acquisition, and more particularly the field of depth image acquisition.

During imaging of a scene, such as by taking a photo or video, a two-dimensional image of the scene is typically acquired by generating a map of image points having specific colour and/or brightness values. However, using conventional photography technologies, it is not possible to also provide additional depth information for said image points.

Different techniques have previously been developed to image a scene or object with additional depth information. Such techniques can be broadly classed into active technologies, relying on a provided illumination source to probe a scene or object, and passive technologies, which measure and evaluate scattered, diffracted, and/or reflected ambient light from said scene or object. As an example, indirect time-of-flight techniques rely on the evaluation of multiple successive measurement cycles to determine a distance to an object.

Within the scope of this disclosure, it was recognised that all said previously developed different techniques suffer from one or more drawbacks, such as for example low depth resolution, long measurement durations, high costs and/or significant computational requirement.

It is therefore an object of this disclosure to provide a device and method for determining a distance to an object with improved operational characteristics.

One aspect relates to a device for determining a distance to an object comprising:

a modulation signal generation unit configured to generate a primary modulation signal;
an emission unit configured to emit a light beam towards the object, wherein the emission unit is further configured to amplitude modulate the light beam so as to have an amplitude modulated optical signal power according to the primary modulation signal;
a detection unit configured to receive at least part of the light beam scattered, diffracted, and/or reflected by the object;
a modulation unit comprising

one or more first modulation sub-units, wherein each first modulation sub-unit is configured to convert one first part of the light beam into one converted first part of the light beam by additionally amplitude modulating an optical power of the respective first part according to a first modulation signal, wherein the first modulation signal is obtained by phase shifting the primary modulation signal by a fixed first additional phase shift value,
one or more second modulation sub-units, wherein each second modulation sub-unit is configured to convert one second part of the light beam into one converted second part of the light beam by additionally amplitude modulating an optical power of the respective second part according to a second modulation signal, wherein the second modulation signal is obtained by phase shifting the modulation signal by a fixed second additional phase shift value,
one or more third modulation sub-units, wherein each third modulation sub-unit is configured to convert one third part of the light beam into one converted third part of the light beam by additionally amplitude modulating an optical power of the respective third part according to a third modulation signal, wherein the third modulation signal is obtained by phase shifting the primary modulation signal by a fixed third additional phase shift value, wherein the fixed first additional phase shift value, the fixed second additional phase shift value, and the fixed third additional phase shift value are different from one another;
wherein the detection unit is configured to detect an optical signal power of each converted first part, converted second part, and converted third part of the light beam scattered, diffracted, and/or reflected from the object; and
a distance determination unit configured to determine a phase difference between the primary modulation signal and the detected optical signal power of each converted first part, converted second part, and converted third part, wherein the distance determination unit is configured to determine the distance to the object based on the determined phase difference.

In particular, it is therefore possible to obtain depth information with a very short measurement duration and low computational requirements. Furthermore, it is further possible to provide a device having a simplified structure, thereby reducing overall manufacturing costs and complexity. In addition, the depth information may also be provided with a high degree of depth resolution.

The object may be an external object. In particular, the device may be directable and/or orientable towards the external object such that the light beam emitted by the emission unit is scattered, diffracted, and/or reflected by the object and subsequently at least partially detected by the detection unit. Alternatively, the object may be comprised by the device. In particular, in such a case, the object may be movable with respect to the emission unit and/or the detection unit, such that the object may be for example placed at a first location and the emission unit and/or modulation unit may be placed at a second location to determine the distance between the first location and the second location. In particular, it may therefore be possible to provide a specific object having preselected optical and physical properties, such as reflectance and/or shape, in order to measure distances to locations that, for example, do not or do not sufficiently allow a light beam to be scattered, diffracted, and/or reflected. Furthermore, it may therefore also be possible to determine distances to locations in free space, such as by placing said specific object at a location in empty space.

The object may comprise one or more sub-objects. In particular, it may therefore be possible to determine the distance to a plurality of sub-objects, such as when taking a photograph of a scene.

The primary modulation signal may be a periodic signal, such as for example a sinusoidal or cosinusoidal signal. The primary modulation signal may comprise a primary modulation signal amplitude and/or a primary modulation signal frequency and/or a primary modulation signal wavelength. It may therefore be possible to provide the modulation signal generation unit having simple components and/or to further reduce the required computational power necessary for the determination of the distance. The modulation signal generation unit may in particular be configured to generate the primary modulation signal having a frequency within a range of approx. 100kHz to 100GHz, preferentially within a range of approx. 1MHz to 10GHz, further preferentially within a range of 1MHz to 1GHz. It is noted that although embodiments may be described in relation to a wavelength $\lambda_S$ of the primary modulation signal and/or a frequency $f_S$ of the primary modulation signal, said frequency $f_S$ and wavelength $\lambda_S$ of the primary modulation signal may be converted into one another via the simple mathematical relation $f_S = c/\lambda_S$, wherein c is the speed of light.

The emission unit may comprise at least one light source configured to emit the light beam. The light source may be any kind of light source capable of emitting a light beam, such as for example a laser diode, e.g. a vertical-cavity surface-emitting laser (VCSEL), a vertical-external-cavity surface-emitting laser (VECSEL) and/or an edge-emitting laser. It may therefore be possible to efficiently and precisely generate and/or emit the light beam from the emission unit.

The emission unit may be configured to emit the light beam within a predefined wavelength range, such that the light beam is, for example, not visible to the human eye. In other words, the light beam may have one or more wavelengths outside the visible light spectrum. The light beam may have one or more wavelengths smaller than approx. 380nm, preferably smaller than approx. 300nm. The light beam may have one or more wavelengths larger than approx. 700nm, preferably larger than approx. 750nm.

Preferably the emission unit is configured to emit the light beam within a spectral range of approx. 750nm to approx. 1050nm. In particular, it may therefore be possible to emit the light beam such that no disruption and/or influence is caused to the vision and viewing ability of for example humans and animals within a measurement scene. This may be of particular importance for use of the device in, for example, traffic applications and/or facial recognition applications and/or medical applications.

The emission unit may further be configured to emit the light beam within a predefined spectral width. The spectral width may be defined as the full width at half maximum of an emission spectrum of the emission unit. The emission unit may further be configured to emit the light beam within a spectral width of at most approx. 100nm, preferably at most approx. 10nm, further preferably at most approx. 5nm. Therefore, by emitting the light beam within a narrow, predefined spectral width and/or wavelength range, it may be possible to reduce the influence of light from external and/or environmental light sources, such as for example light from the sun. It may therefore be possible to further increase the precision and reliability of the determined distance.

The emission unit may be configured to emit the light beam as a coherent light beam. The modulation signal generation unit may be configured to provide the primary modulation signal to the emission unit. The emission unit may be configured to amplitude modulate the light beam to superimpose the primary modulation signal onto the optical signal power of the light beam.

The device further comprises a detection unit configured to receive at least part of the light beam scattered, diffracted, and/or reflected by the object. In particular, the detection unit is configured to detect an optical signal power of each converted first part, converted second part, and converted third part of the light beam scattered, diffracted, and/or reflected from the object. The detection unit may comprise one or more detectors configured to detect electromagnetic radiation. In particular, the one or more detectors may be configured to measure at least an optical power and/or intensity of a light beam incident on the detector, preferentially as an average over time. The one or more detectors may comprise one or more photodetectors. The one or more detectors may comprise one or more CMOS ("complementary metal-oxide-semiconductor") detectors, one or more active pixel sensors, and/or one or more CCD ("charge-coupled device") sensors. Furthermore, each of the one or more detectors may comprise a plurality of sensor sub-units, such as for example a plurality of sensor pixels. The plurality of sensor sub-units may preferably be arranged in a sensor sub-unit matrix arrangement, preferably a two-dimensional sensor sub-unit matrix arrangement. Therefore, the detection unit may be configured to detect an optical power image and/or intensity image from the incident light beam. In particular, the one or more detectors may be configured to detect electromagnetic radiation corresponding to an emission spectrum of the emission unit.

In particular, the detection unit may be configured to detect an optical signal power of each converted first part, converted second part, and converted third part of the light beam scattered, diffracted, and/or reflected from the object simultaneously. In particular, it may therefore be possible to determine the distance to the object in one measurement cycle, thereby significantly improving the overall speed of the determination.

The device further comprises a modulation unit. The modulation unit may be configured to further amplitude modulate the optical signal power of at least part of the light beam scattered, diffracted, and/or reflected from the object. The modulation unit may in particular be arranged along the beam path of at least part of the light beam scattered, diffracted, and/or reflected from the object between the detection unit and the object.

The modulation unit comprises one or more first modulation sub-units, wherein each first modulation sub-unit is configured to convert one first part of the light beam into one converted first part of the light beam by additionally amplitude modulating an optical power of the respective first part according to a first modulation signal, wherein the first modulation signal is generated by phase shifting the primary modulation signal by a fixed first additional phase shift value.

The modulation unit comprises one or more second modulation sub-units, wherein each second modulation sub-unit is configured to convert one second part of the light beam into one converted second part of the light beam by additionally amplitude modulating an optical power of the respective second part according to a second modulation signal, wherein the second modulation signal is generated by phase shifting the primary modulation signal by a fixed second additional phase shift value.

The modulation unit comprises one or more third modulation sub-units, wherein each third modulation sub-unit is configured to convert one third part of the light beam into one converted third part of the light beam by additionally amplitude modulating an optical power of the respective third part according to a third modulation signal, wherein the third modulation signal is generated by phase shifting the primary modulation signal by a fixed third additional phase shift value.

In particular, a part of a light beam may be understood in this sense as a section of the light beam being incident on a section of a cross-section of the light beam perpendicular to a propagation direction, preferably average propagation direction of the light beam. For example, a first part of the light beam may therefore be understood as a part of the light beam incident on one first modulation sub-unit. In particular, the first parts of the light beam, the second parts of the light beam, and the third part of the light beam may be different from one another. In other words, each modulation sub-unit may be configured to amplitude modulate a different part of the light beam.

In particular, each part of the light beam may be incident on one modulation sub-unit only. In other words, each part of the light beam may be different and/or separate from every other part of the light beam. Furthermore, each converted part of the light beam may leave and/or be transmitted by and/or be emitted from one modulation sub-unit only. In other words, each converted part of the light beam may be spatially different and/or separate from every other converted part of the light beam.

The device may further comprise a modulation sub-unit control unit. The modulation sub-unit control unit may be configured to generate for each modulation sub-unit the corresponding modulation signal. For example, the modulation sub-unit control unit may be configured to generate the first modulation signal and to provide the generated first modulation signal to the one or more first modulation sub-units. In particular, the modulation sub-unit control unit may be configured to generate for each modulation sub-unit the corresponding modulation signal by phase-shifting the primary modulation signal by the fixed respective additional phase shift value. For example, the modulation sub-unit control unit may be configured to generate for each first modulation sub-unit the first modulation signal by phase-shifting the primary modulation signal by the fixed first additional phase shift value.

Furthermore, the fixed first additional phase shift value, the fixed second additional phase shift value, and the fixed third additional phase shift value are different from one another. In particular, the fixed first additional phase shift value, the fixed second additional phase shift value, and the fixed third additional phase shift value may be stored in the modulation sub-unit control unit. The fixed first additional phase shift value, the fixed second additional phase shift value, and the fixed third additional phase shift value may be predetermined and/or hardwired into the modulation unit and/or the modulation sub-unit control unit. The fixed first additional phase shift value, the fixed second additional phase shift value, and the fixed third additional phase shift value may alternatively or additionally be adjustable and/or selectable by a user of the device by, for example, entry of an adjustment and/or selection of the fixed first additional phase shift value, the fixed second additional phase shift value, and the fixed third additional phase shift value via an input interface of the device.

Each of the modulation sub-units of the modulation unit may be configured to substantially homogeneously amplitude modulate a respective part of the light beam across the respective modulation sub-unit. In particular, it may therefore be possible to avoid and/or reduce inhomogeneities and/or edge effects during the additional amplitude modulation of the respective part of the light beam.

Furthermore, the modulation unit and/or one or more modulation sub-units may be configured to amplitude modulate at least part of the light beam scattered, diffracted, and/or reflected by the object temporally synchronised to the amplitude modulation of the light beam by the emission unit.

The detection unit is configured to detect an optical signal power of each converted first part, converted second part, and converted third part of the light beam scattered, diffracted, and/or reflected from the object. Furthermore, the device comprises the distance determination unit configured to determine a phase difference between the primary modulation signal and the detected optical signal power of each converted first part, converted second part, and converted third part.

In particular, an optical signal output power $P_{out}(t)$ of the emission unit may be given by:

$$P_{out}(t) = P_0 * (1 + p * \sin(2\pi f_S t)) \qquad (1)$$

In particular, as can be seen from exemplary Equation 1, the optical signal output power $P_{out}(t)$ is amplitude modulated by the emission unit according to a sinusoidal primary modulation signal having a frequency $f_S$. $P_0$ is the average optical signal output power of the emission unit without the amplitude modulation according to the primary modulation signal, $t$ is time, and $p$ is a first modulation coefficient in the range of $0 < p \leq 1$:

$$p = \frac{\Delta P}{P_0} \qquad (2)$$

where $\Delta P$ is an amplitude of the primary modulation signal. For a good signal-to-noise ratio, the emission unit may in particular be configured such that $p \approx 1$. For example, the emission unit may in particular be configured such that $p$ has a value of at least approx. 0.75, preferably at least approx. 0.9, and further preferably at least approx. 0.95.

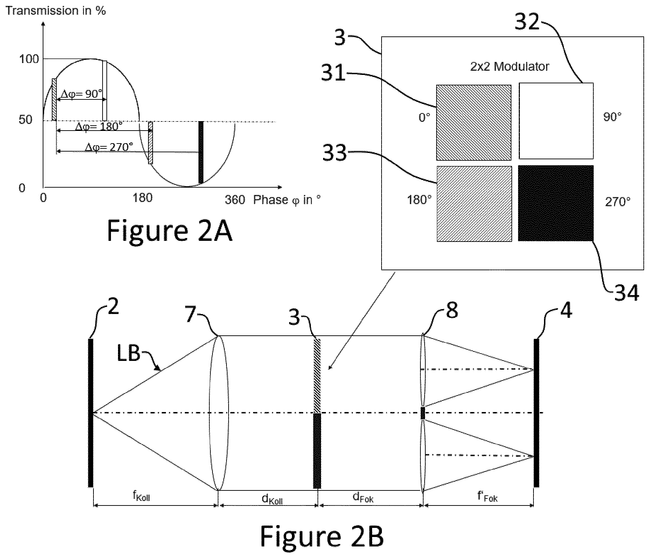

In particular, the modulation unit may be arranged along the path of the scattered, diffracted, and/or reflected light beam between the object and the detection unit. In particular, the modulation unit may be arranged proximal to the detection unit. In particular, the modulation unit may for example be arranged in and/or along and/or parallel to a pupil plane corresponding to a Fourier plane of the device (such as for example shown in the exemplary embodiment of Figure 2B, which is further described below). In particular, the modulation unit may for example be arranged in and/or along and/or parallel to a sensor plane corresponding to an image plane of the detection unit and/or the device. In particular, the modulation unit may for example be arranged substantially directly in front of and/or substantially directly on the detection unit. Substantially directly in front of and/or substantially directly on may be understood in this sense as at a distance of at most approx. 1 cm, preferably at most approx. 1 mm, further preferably at most approx. 0.1 mm, and may encompass small deviations caused by environmental and/or manufacture related circumstances.

In particular, in the exemplary case that the modulation unit is arranged proximal to the detection unit, the optical signal output power of the light beam arriving at the modulation unit may be given as:

$$P_{back}(t) = R_0 * P_0 * (1 + p * \sin(2\pi f_S t - \Delta\varphi)) \qquad (3)$$

In particular, $R_0$ is a ratio of optical signal power backscattered by the object towards the modulator, while $\Delta\varphi$ is a phase difference between the primary modulation signal and the detected optical signal power by the detector. In particular, $\Delta\varphi$ may be a modulation phase delay acquired by the optical signal power of the light beam after having travelled to and from the object.

The modulation unit comprises one or more first modulation sub-units, one or more second modulation sub-units, and one or more third modulation sub-units. Each of the modulation sub-units is configured to additionally amplitude modulate the optical power of a part of the light beam according to the primary modulation signal phase-shifted by a fixed corresponding additional phase shift value. As an example, a first modulation sub-unit may be configured as a transmission electro-absorption modulator, wherein the transmittance $M_1(t)$ of the exemplary first modulation sub-unit may be given as:

$$M_1(t) = M_0 * (1 + m * \sin(2\pi f_S t + \alpha_1)) \qquad (4)$$

Here, $M_0$ may be the transmittance of the exemplary first modulation sub-unit without additionally amplitude modulating the optical signal power of the first part of the light beam and $\alpha_1$ may be the fixed first additional phase shift value. $m$ may be a second modulation coefficient in the range of $0 < m \leq 1$:

$$m = \frac{\Delta M}{M_0} \qquad (5)$$

where $\Delta M$ is an amplitude of the amplitude modulation by the first modulation sub-unit. For a good signal-to-noise ratio, the modulation unit and/or the modulation sub-units may in particular be configured such that $m \approx 1$. For example, the modulation unit and/or the modulation sub-units may in particular be configured such that m has a value of at least approx. 0.75, preferably at least approx. 0.9, and further preferably at least approx. 0.95.

In particular, $\Delta M$, $M_0$, and m may be identical for each of the modulation sub-units.

An optical signal power of the converted first part of the light beam at the detector may therefore be given as:

$$P_1(t) = P_{back.}(t) * M_1(t)$$

$$= \frac{P_0 M_0 R_0}{2} * [2 + 2m * \sin(2\pi f_S t + \alpha_1) + 2p * \sin(2\pi f_S t - \Delta\varphi) + mp * \cos(\alpha_1 + \Delta\varphi) -$$

$$mp * \cos(4\pi f_S t + \alpha_1 - \Delta\varphi)] \tag{6}$$

The optical signal power of the converted first part of the light beam at the detector may be averaged over a time interval $T$ to obtain the average optical signal power $P_1(\Delta\varphi)$, wherein $T >> 1/f_S$:

$$P_1(\Delta\varphi) = \frac{P_0 M_0 R_0}{2} * [2 + mp * \cos(\alpha_1 + \Delta\varphi)]$$

$$= A * \cos(\alpha_1 + \Delta\varphi) + B \tag{7}$$

Similarly, the average optical signal powers for the converted second part and converted third part of the light beam may be given as:

$$P_2(\Delta\varphi) = A * \cos(\alpha_2 + \Delta\varphi) + B \tag{8}$$

$$P_3(\Delta\varphi) = A * \cos(\alpha_3 + \Delta\varphi) + B \tag{9}$$

The above three equations (7), (8), and (9) in particular have three shared unknown values, which may therefore be solvable by the distance determination unit to determine the phase difference $\Delta\varphi$.

Therefore, the distance determination unit may be configured to receive from the detection unit an average optical signal power of the one or more converted first parts, the one or more converted second parts, and the one or more converted third parts in order to solve the above three equations to determine the phase difference $\Delta\varphi$. However, the device is not limited to such an approach, and further measurements may for example be undertaken, such as by providing additionally one or more fourth modulation sub-units. By providing additional sub-units and/or undertaking additional measurements, a precision and reliability of the determined distance may be improved, while the required computational resources for the determination may be reduced.

The distance determination unit is configured to determine the distance to the object based on the determined phase difference. In particular, by the light beam travelling from the emission unit to the object and from the object to the detection unit, a phase difference between the primary modulation signal and the detected optical signal power of the light beam may be caused. Said phase difference may in particular be a function of the travelled distance of the light beam:

$$\Delta\varphi = \frac{2\pi}{\lambda_S} D = \frac{2\pi f_S}{c} D \tag{10}$$

The phase difference is hereby given as $\Delta\varphi$, the distance travelled by the light beam is given as $D$, the wavelength of the primary modulation signal is given as $\lambda_S$, the frequency of the primary modulation signal is given as $f_S$, and the speed of light is given as $c$.

Therefore, under the assumption that a distance $d_{unit}$ between the emission unit and the detection unit is negligibly small, such as in the case of $d_{unit} << D$, a distance $d_{object}$ between the device and the object may be determined by the distance determination unit as:

$$d_{object} = \frac{D}{2} = \frac{c}{4\pi f_S}\Delta\varphi = \frac{\lambda_S}{4\pi}\Delta\varphi \qquad\qquad (11)$$

Alternatively, if the distance $d_{unit}$ between the emission unit and the detection unit is not negligibly small, a distance $d_{object}$ between the device and the object may be determined by the distance determination unit as:

$$d_{object} = \frac{1}{2}\sqrt{(D)^2 - (d_{unit})^2} \qquad\qquad (12)$$

$$d_{object} = \frac{1}{2}\sqrt{\left(\frac{c}{2\pi f_S}\Delta\varphi\right)^2 - (d_{unit})^2} \qquad\qquad (12a)$$

$$d_{object} = \frac{1}{2}\sqrt{\left(\frac{\lambda_S}{2\pi}\Delta\varphi\right)^2 - (d_{unit})^2} \qquad\qquad (12b)$$

Please note that the above is given as an example only, and in particular may be applicable under the assumption of the light beam being reflected at the object under preservation of a reflection angle. In other exemplary cases, the distance $d_{object}$ may be determined by considering and/or calculating a sensitivity vector $\vec{K}$, wherein the phase difference is given by the scalar product of the sensitivity vector and a distance vector between the detection unit and the object.

Therefore, the device is able to efficiently and reliably calculate the distance to the object. In particular, the distance $d_{unit}$ may be stored in and/or inputted into the distance determination unit prior to the determination of the distance.

In particular, the distance determination unit may be configured to determine the distance to the object by determining a total distance travelled by the light beam between the emission unit and the detection unit based on the determined phase difference, and determining the distance to the object based on the determined total distance travelled by the light beam.

Furthermore, as the distance determination unit is configured to detect the phase difference based on the primary modulation signal and the detected optical signal power of each converted first part, converted second part, and converted third part, it is possible to determine the distance to the object in a single measurement cycle.

Therefore, the device is able to rapidly determine the distance to the object. Furthermore, by relying on a single measurement cycle, the device is able to reliably determine the distance to the object even if the object moves relative to the device. This is in particularly beneficial if the object moves at a significant speed, which may otherwise cause a determination of a distance to the moving object to no longer be possible. Specifically, it therefore becomes possible to determine the distance to the object in real-time.

Furthermore, light from external and/or environmental sources may also contribute to an optical signal power detected by the detection unit. Therefore, if multiple measurement cycles are necessary to determine the distance to the object, light from external and/or environmental sources may vary over a measurement time over all necessary measurement cycles and thereby introduce a further error element into the determined distance to the object. However, by providing a device being able to determine the distance to the object in a single measurement cycle, such varying external light does not result in additional uncertainty and/or errors in the determined distance to the object.

In addition, the device allows the determination of a distance to an object without having to rely on movable mechanical components of the device, thereby increasing a lifetime and reliability of the device. Furthermore, the device may be implemented in a compact form.

While certain embodiments may be described in terms of the one or more first modulation sub-units, the one or more second modulations sub-units, and the one or more third modulation sub-units, the device is not limited thereto. In particular, the modulation unit may comprise additional modulation sub-units, such as for example one or more fourth modulation sub-units.

The modulation signal generation unit may be configured to provide the primary modulation signal to the emission unit and/or to the modulation unit.

The modulation unit and/or the modulation sub-units may be substantially planar. In particular, the modulation unit may comprise a substantially planar substrate, wherein the one or more first modulation sub-units, the one or more second modulation sub-units, and/or the one or more third modulation sub-units may be substantially planar and arranged on the substantially planar substrate. Each modulation sub-unit may be arranged substantially adjacent to at least one other modulation sub-unit. Every two adjacent modulation sub-units may be separated by an isolation trench in the substrate to electrically isolate said adjacent modulation sub-units from one another. Thereby, reliable operation and control of each modulation sub-unit may be possible. In particular, the substrate may be substantially transparent. Preferentially, the substrate may be substantially transparent to electromagnetic radiation having a wavelength spectrum substantially similar to an emission spectrum of the emission unit. In particular, the substrate may comprise for example a glass and/or a semiconductor. The modulation unit and/or the modulation sub-units are not restricted to substantially planar geometries however, and other geometries may be implemented, e.g., curved, for example at least partially concave and/or at least partially convex and/or at least partially parabolic, and/or angled geometries. For example, in particular in view of potential wave aberrations such as spherical aberrations, a geometry and/or curvature of the modulation unit and/or the modulation sub-units may be chosen to substantially correspond to an incident wavefront on the modulation unit and/or the modulation sub-units from the object. Furthermore, the larger a distance travelled by the light beam through the modulation unit and/or the modulation sub-units, the larger an influence of the geometry of the modulation unit and/or the modulation sub-units and their respective refractive index on an imaging quality of the detection unit.

Alternatively or additionally, the one or more first, second, and third modulation sub-units may be arranged on a first surface of the substrate and a second surface of the substrate, wherein the first surface of the substrate and the second surface of the substrate may be opposite surfaces of the substrate. In particular, the first surface of the substrate may be substantially parallel to the second surface of the substrate. Furthermore, the one or more first, second, and third modulation sub-units may be arranged on the first surface of the substrate and the second surface of the substrate such that every two adjacent modulation sub-units when viewed perpendicular to the substrate may be arranged on opposite surfaces of the substrate. Furthermore, the first, second, and third modulation sub-units may be arranged on the first surface of the substrate and the second surface of the substrate to not overlap one another along a direction perpendicular to the substrate. Thereby, adjacent modulation sub-units may be separated and isolated from one another by the substrate along a thickness direction of the substrate without the need for isolation trenches between adjacent and/or neighbouring modulation sub-units.

In particular, the modulation unit and/or the one or more modulation sub-units may be manufactured by at least one of epitaxy and wafer bonding.

The emission unit may be arranged at a first location and the detection unit and/or the modulation unit may be arranged at a second location, wherein the distance determination unit is configured to determine an adjusted distance to the object based on the determined distance to the object, the first position, and the second position. Therefore, the device may be able to take into account the relative positions of the emission unit, and the modulation unit and/or the detection unit during the determination of the distance to the object.

Furthermore, the emission unit and one or both of the detection unit and the modulation unit may be mounted on a substantially planar substrate, wherein the emission unit may be separated from the detection unit and/or the modulation unit by a first length along the substrate, wherein the distance determination unit is configured to determine the adjusted distance to the object based on the determined distance to the object and the first length. In particular, by mounting the emission unit and one or both of the modulation unit and the detection unit on a substantially planar substrate, the manufacturing and operation of the device may be significantly improved.

The device may be configured such that an angle between an optical emission axis of the emission unit and the substrate has a value of at least approx. 75°, preferably at least approx. 80°, further preferably at least approx. 85°, and/or has a value of at most approx. 105°, preferably at most approx. 100°, further preferably at most approx. 95°. In particular, the optical emission axis of the emission unit may be substantially parallel to an average propagation direction of the light beam emitted by the emission unit. In particular, the device may be configured such that a relative angle between the optical emission axis of the emission unit and a normal vector of the substrate may be at most approx. 15°, preferably at most approx. 10°, further preferably at most approx. 5°. Thereby, it may be possible to reduce aberrations of the device.

The device may be configured such that an angle between a normal vector of an incidence surface of the detection unit and the substrate has a value of at least approx. 75°, preferably at least approx. 80°, further preferably at least approx. 85°, and/or has a value of at most approx. 105°, at most approx. 100°, further preferably at most approx. 95°. The incidence surface of the detection unit may be a surface of the detection unit, upon which at least each detected converted first part, converted second part, and converted third part of the light beam is incident. In particular, the device may be configured such that a relative angle between the normal vector of the incidence surface of the detection unit and a normal vector of the substrate may have a value of at most approx. 15°, preferably at most approx. 10°, further preferably at most approx. 5°. Thereby, it may be possible to reduce aberrations of the device.

The modulation unit and/or one or more of the modulation sub-units may be implemented as electro-absorption modulators. In particular, the modulation unit and/or one or more of the modulation sub-units may be implemented as transmission electro-absorption modulators, wherein the modulation unit may be arranged along the path of the light beam between the object and the detection unit.

Alternatively, the modulation unit and/or one or more of the modulation sub-units may be implemented as reflection electro-absorption modulators, wherein the modulation unit may be arranged along the path of the light beam between the object and the detection unit and further configured to reflect the light beam onto the detection unit. In particular, it may therefore be possible to implement the device even for one or more wavelengths of the light beam at which no transparent substrate for the modulation unit and/or one or more of the modulation sub-units may be found.

In particular, the modulation unit and/or one or more of the modulation sub-units may be implemented as reflection electro-absorption modulators, wherein the device may comprise one or more additional beam directing elements. The one or more beam directing elements may in particular be configured to at least partially change a direction of a light beam incident thereon. For example, the one or more additional beam directing elements may be configured as one or more beam splitters, e.g., 50/50 beam splitters. In particular, the one or more additional beam directing elements may be configured to at least partially reflect the light beam from the object onto the modulation unit and/or the one or more modulation sub-units, and may further be configured to at least partially allow light reflected from the modulation unit and/or the one or more modulation sub-units to pass to be incident on the detection unit.

The modulation unit may in particular be configured to amplitude modulate the optical signal power of the scattered, diffracted, and/or reflected light beam between the object and the detection unit.

The modulation unit may comprise one or more fourth modulation sub-units, wherein each fourth modulation sub-unit is configured to convert one fourth part of the light beam into one converted fourth part of the light beam by additionally amplitude modulating an optical power of the respective fourth part according to a fourth modulation signal, wherein the fourth modulation signal is generated by phase shifting the primary modulation signal by a fixed fourth additional phase shift value. Furthermore, the fixed first additional phase shift value, the fixed second additional phase shift value, the fixed third additional phase shift value, and the fixed fourth additional phase shift value may be different from one another. In particular, the fixed fourth additional phase shift value may be stored in the modulation sub-unit control unit. The fixed fourth additional phase shift value may be predetermined and/or hardwired into the modulation unit and/or the modulation sub-unit control unit. The fixed fourth additional phase shift value may alternatively or additionally be adjustable and/or selectable by a user of the device by, for example, entry of an adjustment and/or selection of the fixed fourth additional phase shift value via an input interface of the device. In particular, the detection unit may be configured to detect an optical signal power of each converted first part, converted second part, converted third part, and converted fourth part of the light beam scattered, diffracted, and/or reflected from the object, and the distance determination unit may be configured to determine a phase difference between the primary modulation signal and the detected optical signal power of each converted first part, converted second part, converted third part, and converted fourth part.

However, the device is not restricted to such a number of modulation sub-units. In particular, the modulation unit may comprise N sets of one or more respective modulation sub-units, wherein $N \geq 3$. For example, for each i-th (i=1 ... N) set of one or more i-th modulation sub-units, each i-th modulation sub-unit may be configured to convert one i-th part of the light beam into one converted i-th part of the light beam by additionally amplitude modulating an optical power of the respective i-th part according to an i-th modulation signal, wherein the i-th modulation signal may be generated by phase shifting the primary modulation signal by a fixed i-th additional phase shift value. Higher values of N may lead to an increased noise reduction. Furthermore, higher values of N may lead to an increased achievable depth resolution, wherein the achievable depth resolution may be proportional to $1/\sqrt{N}$.

The fixed first additional phase shift value may be 0°, the fixed second additional phase shift value may be 90°, the fixed third additional phase shift value may be 180°, and the fixed fourth additional phase shift value may be 270°. In particular, by choosing the fixed first to fourth additional phase shift values in such a manner the determination of the phase difference may be significantly facilitated. In such a case, the following four equations may be obtained:

$$P_1(\Delta\varphi) = A * \cos(\Delta\varphi) + B \qquad (13)$$

$$P_2(\Delta\varphi + 90°) = -A * \sin(\Delta\varphi) + B \qquad (14)$$

$$P_3(\Delta\varphi + 180°) = -A * \cos(\Delta\varphi) + B \qquad (15)$$

$$P_4(\Delta\varphi + 270°) = A * \sin(\Delta\varphi) + B \qquad (16)$$

Therefore, it may be possible to obtain the following equation:

$$\tan(\Delta\varphi) = \frac{P_4 - P_2}{P_1 - P_3} \qquad\qquad (17)$$

to consequently obtain:

$$\Delta\varphi = arctan\left(\frac{P_4 - P_2}{P_1 - P_3}\right) \qquad\qquad (18)$$

In particular, each of the one or more first modulation sub-units, one or more second modulation sub-units, one or more third modulation sub-units, and one or more fourth modulation sub-units may be an electro-absorption modulator.

The modulation unit may comprise one first modulation sub-unit, one second modulation sub-unit, one third modulation sub-unit, and one fourth modulation sub-unit, wherein each of the first modulation sub-unit, second modulation sub-unit, third modulation sub-unit, and fourth modulation sub-unit is configured such that a respective image of the object is formed for each respective converted part of the light beam on a separate section of the detection unit.

In particular, the detection unit may comprise a first plurality of sensor pixels, a second plurality of sensor pixels, a third plurality of sensor pixels, and a fourth plurality of sensor pixels. In particular, the first modulation sub-unit may be configured such that the converted first part of the light beam may be incident on the first plurality of sensor pixels. In particular, the second modulation sub-unit may be configured such that the converted second part of the light beam may be incident on the second plurality of sensor pixels. In particular, the third modulation sub-unit may be configured such that the converted third part of the light beam may be incident on the third plurality of sensor pixels. In particular, the fourth modulation sub-unit may be configured such that the converted fourth part of the light beam may be incident on the fourth plurality of sensor pixels. In particular, a point on the object from which the light beam is scattered, diffracted, and/or reflected may therefore be imaged onto at least one first sensor pixel of the first plurality of sensor pixels, at least one second sensor pixel of the second plurality of sensor pixels, at least one third sensor pixel of the third plurality of sensor pixels, and at least one fourth sensor pixel of the fourth plurality of sensor pixels. Therefore, the distance determination unit may be configured to group at least one first sensor pixel of the first plurality of sensor pixels, at least one second sensor pixel of the second plurality of sensor pixels, at least one third sensor pixel of the third plurality of sensor pixels, and at least one fourth sensor pixel of the fourth plurality of sensor pixels, onto which the at least one point of the object is imaged, and subsequently determine the distance to the point of the object. Thereby it is possible to efficiently obtain a detailed depth information map of the object.

The device may further comprise a first focusing lens, wherein the first focusing lens is configured to focus the converted first part of the light beam scattered, diffracted, and/or reflected from the object onto the first plurality of sensor pixels. The device may further comprise a second focusing lens, wherein the second focusing lens is configured to focus the converted second part of the light beam scattered, diffracted, and/or reflected from the object onto the second plurality of sensor pixels. The device may further comprise a third focusing lens, wherein the third focusing lens is configured to focus the converted third part of the light beam scattered, diffracted, and/or reflected from the object onto the third plurality of sensor pixels. The device may further comprise a fourth focusing lens, wherein the fourth focusing lens is configured to focus the converted fourth part of the light beam scattered, diffracted, and/or reflected from the object onto the fourth plurality of sensor pixels.

The distance determination unit may further be configured to compare the images obtained by each of the first plurality of sensor pixels, the second plurality of sensor pixels, the third plurality of sensor pixels, and the fourth plurality of sensor pixels to obtain additional stereoscopic depth information of the object. The additional stereoscopic depth information may be used to orient and/or expand a depth measuring range of the device.

The modulation unit may further comprise a plurality of modulation arrays, wherein each modulation array is a 2x2 array of one first modulation sub-unit, one second modulation sub-unit, one third modulation sub-unit, and one fourth modulation sub-unit. The modulation unit may be arranged proximal to the detection unit such that each one of the first modulation sub-units, second modulation sub-units, third modulation sub-units, and fourth modulation sub-units corresponds to one sensor pixel of the detection unit, respectively. In other words, the modulation unit may be arranged proximal to the detection unit such that for each 2x2 array the respective first to fourth converted parts of the light beam are imaged onto separate sensor pixels, e.g. of a corresponding 2x2 sensor pixel array, of the detection unit. Subsequently, the distance determination unit may be configured to determine a distance to the object for each 2x2 array. The modulation unit may be arranged proximal to the detection unit such that an air gap therebetween is minimized, wherein the presence of such an air gap is preferably substantially completely avoided. The modulation unit may be arranged proximal to the detection unit such that a distance between the modulation unit and the detection unit is minimized, wherein such a distance preferably has a value of substantially approx. zero metres. Substantially approx. zero metres may be understood as including small deviations, which may for example be caused by environmental or manufacturing related circumstances. In particular, the modulation unit may comprise the plurality of modulation arrays such that every sensor pixel of the detection unit may be associated with one of the modulation sub-units. For example, for a 2D detection unit comprising 1024x1024 sensor pixels 512x512 2x2 arrays may be provided to cover all sensor pixels of the entire detection unit. In particular, the detection unit may be further configured such that an Airy disc corresponds to 4x4 sensor pixels. Furthermore, a fill factor of the modulation unit may be low due to the electrical connections necessary to control the modulation unit and/or the modulation sub-units, wherein the modulation unit may further comprise a microlens array arranged proximal to the modulation unit along the path of the beam between the modulation unit and the object. In particular, it may therefore be possible to further increase the fill factor.

The modulation unit may comprise P modulation stripe arrays, wherein each modulation stripe array is a 4x1 array of one first modulation sub-unit, one second modulation sub-unit, one third modulation sub-unit, and one fourth modulation sub-unit. In particular, each of the one first modulation sub-unit, one second modulation sub-unit, one third modulation sub-unit, and one fourth modulation sub-unit of each modulation stripe array may be substantially rectangular having a long side and a short side. In particular, the one first modulation sub-unit, one second modulation sub-unit, one third modulation sub-unit, and one fourth modulation sub-unit may be aligned along their respective long sides in the respective modulation stripe array. In particular, the modulation unit may be a Px1 array of the modulation stripe arrays. A periodicity of the modulation sub-units in the Px1 array may be chosen such that a maximal spatial frequency under an image aperture angle of the detection unit may be recorded and such that the periodicity may be scanned by at least two sensor pixels of the detection unit according to the Nyquist criterium. Based thereon, it may be possible to determine a maximally allowed image aperture angle of the detection unit.

In particular, the Px1 array may be arranged proximal to the detection unit. Furthermore, the Px1 array may be rotated around a rotation angle with respect to the detection unit. In particular, the Px1 array may be rotated by the rotation angle around an axis perpendicular to the detection unit and/or parallel to a propagation direction of the light beam scattered, diffracted, and/or reflected from the object. In other words, each long side of the modulation sub-units of the Px1 array may form the rotation angle with a side of the detection unit. In particular, the rotation angle may be chosen according to dimensions of the detection unit, and may be further chosen to optimally use the detection unit's space-bandwidth product and to achieve good separation of image terms and DC-term (0Hz term) in Fourier space. The DC-term may in particular correspond to a non-alternating part of the detected signal at the detection unit. In particular, the DC-term may correspond for example to the constant "B" term in one or more of equations (7) to (9). For example, for a quadratic detection unit, the rotation angle may therefore be chosen to be 45°. In particular, the detection unit may have a substantially rectangular incidence surface, wherein the incidence surface may have a first side of length $l$ and a second side of length $w$, wherein the rotation angle may be given by $\alpha = arctan(l/w)$.

In particular, the Px1 array may be configured to temporally amplitude modulate an optical power of the light beam, while a periodicity of the Px1 array may further cause a spatial modulation. The spatial modulation may therefore allow a determination of phase information, in particular the phase difference, in Fourier space. Specifically, the spatial modulation may cause a separation of an image component, twin image component, and DC-component in Fourier space of the light beam detected by the detection unit.

Furthermore, the modulation unit is not restricted to such modulation stripe arrays. In particular, the modulation unit may comprise N sets of one or more respective modulation sub-units. Each modulation stripe array may in particular be a Nx1 array of one modulation sub-unit of each of the N sets of modulation sub-units, wherein N is a natural number larger or equal to three.

Furthermore, the detection unit may be configured to have a resolution, which may determine a maximal spatial frequency, such that each imaged point of the object may be associated with a phase difference value. A spatial frequency bandwidth in the image plane may be composed of positive and negative spatial frequencies and may therefore have an absolute value twice as large as the respective maximal spatial frequency:

$$\Delta v = \left|2v_{x\_obj}\right| = 2\frac{NA}{\lambda\beta\prime} = 2\frac{NA\prime}{\lambda} = 2\frac{\sin(u')}{\lambda} \qquad (19)$$

wherein $\sin(u')$ may correspond to an image side aperture $NA'$, $u'$ may correspond to an image aperture angle, $\lambda$ may correspond to a light wavelength, and $\beta$ may correspond to a magnification.

For the example of a rotation angle of 45°, a modulation carrier frequency may fulfil the following requirement:

$$v_{Cf} \geq \sqrt[2]{v_{x\_obj}^2 + v_{y\_obj}^2} = \sqrt[2]{2}\frac{\sin(u')}{\lambda} \qquad (20)$$

Furthermore, a scanning frequency of the detection unit may be taken into account such that a modulation carrier frequency may be scanned with a double frequency according to the Nyquist criterion:

$$v_{sensor} = \frac{1}{\Delta x} \geq 2v_{Cf} \geq 2\sqrt[2]{2}\,\frac{\sin{(u')}}{\lambda} \qquad (21)$$

As an exemplary calculation, for a pixel size $\Delta x = 5\mu m$, a light wavelength $\lambda = 850nm$, a modulation carrier frequency $v_{Cf}$ half as big as a scanning frequency $v_{sensor}$ of the detection unit ($v_{Cf} = 1/(2\Delta x) = 100lp/mm$ (wherein the unit *lp/mm* is *line pairs per mm*)), the maximal image aperture angle may be

$$u' = asin\left(\frac{\lambda}{\sqrt[2]{2}*2\Delta x}\right) = 0.0601 rad =$$ 3.45°. Similarly, a maximal resolution of the detection unit may be determined based on the magnification $\beta$ and the light wavelength $\lambda$.

A depth resolution of the device may be independent of an object side aperture angle or an image side aperture angle and the image scale. In particular, the depth resolution may only be determined by the primary modulation signal wavelength and a signal-to-noise ratio of the detection unit. Typically, the depth resolution may be approx. 1/100 of a measurement range, which may be approx. 1/200 of the primary modulation signal wavelength.

The distance determination unit may be further configured to perform a Fourier transform, preferentially a spatial Fourier transform, of an image of the detected optical signal power of the light beam scattered, diffracted, and/or reflected from the object, wherein the image is detected by the array of sensor pixels. Furthermore, the distance determination unit may be further configured to isolate and centre image information from the Fourier transform of the image. In particular, the Fourier transform of the image may result in an image component in Fourier space, a twin-image component in Fourier space, and a DC-component in Fourier space. The distance determination unit may be configured to isolate and centre the image component in Fourier space. The distance determination unit may be further configured to perform an inverse Fourier transform of the isolated and centred image information, in particular the isolated and centred image component, to determine the phase difference information, in particular for a plurality of image points. Thereby, phase information of the originally detected optical signal power may be obtained.

Furthermore, when using a periodic primary modulation signal, an ambiguity may arise in the determined distance. In particular, due to the periodic nature of the modulation signal, such an ambiguity arises if the total distance travelled by the light beam from the emission unit to the object and back to the detection unit is greater than the wavelength of the primary modulation signal.

The modulation signal generation unit may be configured to be capable of generating a primary modulation signal having a range of different wavelengths. In particular, the modulation signal generation unit may be configured to generate an initial primary modulation signal having a large wavelength. For example, the large wavelength may be approx. 300m. In such an example, the device may be able to determine the distance to an object without ambiguity, if the distance travelled by the light beam from the emission unit to the object and back to the detection unit is smaller than the large wavelength. The device may be configured to perform an initial determination of the distance travelled by the light beam from the emission unit to the object and back to the detection unit on the basis of the initial primary modulation signal. The modulation signal generation unit may be configured to subsequently generate the primary modulation signal having a wavelength smaller than the large wavelength but larger than the distance travelled by the light beam from the emission unit to the object and back to the detection unit, as determined during the initial determination. In particular, the modulation signal generation unit may be configured to subsequently generate the primary modulation signal having a wavelength approx. 20% larger, preferentially approx. 10% larger, further preferentially approx. 5% larger than the distance travelled by the light beam from the emission unit to the object and back to the detection unit, as determined during the initial determination. While the above has been described in relation to one distance to the object, it is appreciated that a similar approach may be used when considering multiple different distances to the object, such as by subsequently generating the primary modulation signal having a wavelength smaller than the large wavelength but larger than the largest distance travelled by the light beam from the emission unit to the object and back to the detection unit, as determined during the initial determination. Thereby it may be possible to efficiently provide distance information to the object with high precision. In particular, the modulation signal generation unit may comprise at least one tunable frequency generator and/or at least one frequency generator with at least two hard-wired frequencies. Alternatively, multiple modulation signals, comprising at least the initial primary modulation signal and the primary modulation signal, may be hard-wired into the modulation signal generation unit.

The device may further comprise a collimator lens unit. The collimator lens unit may comprise one or more collimator lenses, such as one or more refractive collimator lenses and/or one or more diffractive collimator lenses and/or one or more hybrid collimator lenses. The collimator lens unit may be configured to collimate the light beam scattered, diffracted, and/or reflected from the object, and to preferably project the collimated light beam onto an aperture and/or the modulation unit. Preferably, the collimator lens unit is configured to collimate the scattered, diffracted, and/or reflected light beam to substantially fully illuminate the aperture and/or the modulation unit. Therefore, it may be possible to maximise the intensity and/or optical signal power of the scattered, diffracted, and/or reflected light beam detected by the detection unit, while also substantially fully utilizing the aperture and/or modulation unit. Therefore, it may be possible to increase the overall efficiency and reliability of the device.

The device may further comprise a focusing lens unit. The focusing lens unit may comprise one or more focusing lenses, such as one or more refractive focusing lenses and/or one or more, preferably diffractive, focusing lenses and/or one or more hybrid focusing lenses. The focusing lens unit may be configured to focus the light beam scattered, diffracted, and/or reflected from the object, and to preferably focus the light beam onto the modulation unit and/or the detection unit. The focusing lens unit may be positioned along the path of the light beam scattered, diffracted, and/or reflected from the object and may further be positioned between the collimator lens unit and the detection unit. Preferably, the focusing lens unit is configured to focus the scattered, diffracted, and/or reflected light beam to substantially fully illuminate the detection unit and/or the modulation unit. Therefore, it may be possible to maximise the intensity of the scattered, diffracted, and/or reflected light beam, while also fully utilizing the detection unit and/or modulation unit. Therefore, it may be possible to increase the overall efficiency and reliability of the device.

The device may further comprise an aperture. The aperture may be positioned along the path of the light beam scattered, diffracted, and/or reflected from the object. In particular, the aperture may be positioned between the collimator lens unit and the focusing lens unit.

The modulation unit and/or one or more modulation sub-units may be configured as a modulation unit chip and/or one or more modulation sub-unit chips, respectively. The modulation unit chip and/or the one or more modulation sub-unit chips may be fabricated from one or more semiconductor materials with a direct energy bandgap. The one or more semiconductor materials may comprise so-called III/V mixed compound semiconductors formed from elements in the third and fifth columns of the periodic table of elements. The modulation unit chip and/or the one or more modulation sub-unit chips may further comprise one or more ohmic contacts, wherein the one or more ohmic contacts may be formed by deposition of metal onto the modulation unit chip and/or the one or more modulation sub-unit chips, wherein the one or more ohmic contacts are configured such that an electrical signal may be applied to the respective modulation unit and/or the one or more modulation sub-units via the corresponding one or more ohmic contacts. The one or more ohmic contacts may comprise a metallic contact ring as an upper contact, for example an upper p-type contact, and a lower contact, for example a lower n-type contact, on a back surface of the substrate. The lower contact may in particular be connected to a plurality of modulation sub-units and/or modulation sub-unit chips. Alternatively, the one or more ohmic contacts may comprise a first metallic contact ring and a second metallic contact ring as a first and second upper contact, respectively.

Electronic components of the modulation unit chip and/or one or more modulation sub-unit chips, such as Si-based electronic components, may be integrated with optoelectronic components of the modulation unit and/or modulation sub-units in a hybrid fashion. In particular, the modulation sub-unit control unit may for example be placed directly on the detection unit, such as a CMOS sensor, wherein the modulation unit chip and/or one or more modulation sub-unit chips may be bonded to the detection unit by means of a flip-chip bonding process.

Alternatively, the modulation unit chip and/or one or more modulation sub-unit chips and electronic components, such as the modulation sub-unit control unit, may be mounted in a frame using a Chip-on-Board process. The frame may be formed from printed circuit board material. The frame may comprise an optical window, wherein the modulation unit and/or one or more modulation sub-units may be aligned with the optical window. In particular such an alignment may have higher precision tolerances, wherein such an alignment may for example be achieved by providing a specific alignment frame on the frame and/or the modulation unit.

The modulation sub-units may be connected to the modulation sub-unit control unit via solder interfaces. Thereby a compact design of the modulation unit may be possible. Alternatively or additionally, the modulation sub-units may be connected to the modulation sub-unit control unit via wire bonding.

In particular, the modulation unit chip and/or one or more modulation sub-unit chips may be configured such that all electric contacts to the modulation unit and/or the one or more modulation sub-units are disposed on the same side of the modulation unit chip and/or one or more modulation sub-unit chips. In particular, the modulation unit chip and/or one or more modulation sub-unit chips may be configured such that all electric contacts to the modulation unit and/or the one or more modulation sub-units are disposed on the same side of the modulation unit chip and/or one or more modulation sub-unit chips as the modulation unit and/or one or more modulation sub-units.

The modulation unit may comprise P modulation stripe arrays, wherein each modulation stripe array is a 4x1 array of one first modulation sub-unit, one second modulation sub-unit, one third modulation sub-unit, and one fourth modulation sub-unit, and wherein the modulation unit is a Px1 array of the modulation stripe arrays. The modulation unit chip may in particular comprise an upper contact area and/or lower contact area. The upper contact area and the lower contact area may be disposed on a same surface of the modulation chip as the modulation stripe arrays. In particular, the upper contact area and/or lower contact area may be disposed on opposite sides of the modulation stripe arrays along an edge of the modulation unit chip. The upper contact area and/or the lower contact area may comprise a first horizontal contact band, wherein the first horizontal contact band may be configured to electrically contact each of the first modulation sub-units. The upper contact area and/or the lower contact area may comprise a second horizontal contact band, wherein the second horizontal contact band may be configured to electrically contact each of the second modulation sub-units. The upper contact area and/or the lower contact area may comprise a third horizontal contact band, wherein the third horizontal contact band may be configured to electrically contact each of the third modulation sub-units. The upper contact area and/or the lower contact area may comprise a fourth horizontal contact band, wherein the fourth horizontal contact band may be configured to electrically contact each of the fourth modulation sub-units. As can be understood, the upper contact area and/or the lower contact area may comprise a particular horizontal contact band configured to electrically contact each modulation sub-unit of a particular group of modulation sub-units. In particular, it may therefore be possible to efficiently contact and control all modulation sub-units even when the respective modulation sub-units may have a size too small for e.g. flip-chip bonding processes and/or wire bonding processes. Each horizontal contact band may be substantially perpendicularly arranged to the one or more modulation sub-units. Each horizontal contact band may be at least partially disposed on a passivation and/or isolation layer. The passivation and/or isolation layer may be disposed on at least a part of the one or more modulation sub-units. The passivation and/or isolation layer may comprise one or more contact openings, wherein the respective horizontal contact band is configured to electrically contact one or more respective modulation sub-units through the one or more contact openings in the passivation and/or isolation layer. The modulation unit chip may further comprise one or more bond pads, wherein each bond pad is connected to one of the horizontal contact bands to allow electronic components, such as the modulation sub-unit control unit, to contact and control the one or more modulation sub-units connected to the respective horizontal contact band. The passivation and/or isolation layer may further comprise one or more bond pad openings, wherein the horizontal contact band is configured to electrically contact one or more respective bond pads through the one or more bond pad openings in the passivation and/or isolation layer.

Preferably, an air gap between the modulation unit and/or one or more modulation sub-units mounted on the frame, and the detection unit may be further minimized. For example, the modulation unit and/or one or more modulation sub-units may be mounted on a side of the frame facing the detection unit. Electronic components, such as the modulation sub-unit control unit, may in particular be mounted on a side of the frame facing away from the detection unit.

The modulation unit and/or one or more modulation sub-units may further comprise an anti-reflection coating.

The device may further comprise a filter unit. The filter unit may be arranged along the path of the light beam scattered, diffracted, and/or reflected from the object. The filter unit may be configured to filter out electromagnetic radiation having a wavelength not corresponding to a wavelength range of the emission unit. In particular, the filter unit may be configured to filter out electromagnetic radiation having a wavelength outside of the wavelength range of the emission unit. Therefore, it may be possible to further reduce the influence of light from external and/or environmental sources, such as the sun, on the determination of the distance. In particular, it may therefore be possible to further increase the precision and reliability of the device. It may further be possible to filter out electromagnetic radiation capable of damaging the modulation unit and/or the detection unit, thereby reducing the occurrence of damage to the device and/or increasing the lifetime of the device.

The device may be implemented as a 3D camera and configured to capture 3D images of one or more objects. Therefore, it is possible to obtain both lateral and depth information of the object. The device may, for example, be used to obtain 3D models of one or more objects, to obtain a 3D representation of an environment, space, and/or object, to obtain 3D information of an object and to subsequently identify the object, such as during gesture and/or facial recognition, to obtain environmental 3D information to guide and/or control a vehicle, movable object, machine, and/or robot, to obtain environmental 3D information to monitor an area or volume, to obtain 3D information to control 3D construction, such as during 3D printing or assembly of parts, and/or to obtain 3D environmental information to visually inspect and/or diagnose the one or more objects.

The device may further comprise a display unit configured to display the determined distance to the one or more objects. The displayed determined distance may be presented in numerical form and/or as a visual representation of the object.

The modulation unit may further comprise one or more isolation trenches. In particular, each isolation trench is configured to electrically isolate at least two modulation sub-units from one another. Therefore, by providing said one or more isolation trenches, it is possible to apply different voltages and/or control signals to each of the modulation sub-units. The one or more isolation trenches may be manufactured by thin film and/or semiconductor fabrication technologies, such as by reactive ion etching and/or focused ion beam milling. In particular, the one or more isolation trenches may have a width of at most approx. 150nm, preferentially at most approx. 100nm, and/or the one or more isolation trenches may have a width of at least approx. 50nm, preferentially at least approx. 100nm. The one or more isolation trenches may be filled by a dielectric material, wherein it is therefore possible to efficiently ensure a surface passivation of the modulation unit.

The modulation unit may be implemented as a semiconductor material system, wherein a particular choice of semiconductor materials may be taken based on the desired primary modulation signal wavelength and/or other operational parameters of the device. For example, for a desired primary modulation signal wavelength range around approx. 850nm and 940nm, the modulation unit may be manufactured based on a layered semiconductor structure of (In)Al-GaAs/GaAs, and may comprise one or more P-containing (phosphorous-containing) strain compensation layers. For example, for longer desired primary modulation signal wavelengths, InGaAsP/InP, InAlGaAs/InP and/or GaInNAs/GaAs based systems, as well as GaSb-substrates may be used. For example, for shorter desired primary modulation signal wavelengths, such as for example in the visible electromagnetic spectrum, InAlGaP/GaAs, InAlGaN/GaN and/or nitridic semiconductors on a sapphire substrate may be used. A doping sequence of a diode structure may determine the polarity of an applicable voltage potential in blocking direction to the modulation unit and/or the modulation sub-units. p-/n-doped sections may comprise different layers of different material composition, such as for example Bragg-reflector structures for resonant modulators. This may, for example, also include coupled multi-resonators for formation of a spectral (angle dependent) transmission curve, for example by providing multiple separated i sections (intrinsic sections and/or not intentionally doped sections). For potential distribution and carrying away of current within a modulation sub-unit, one or more thin, highly doped semiconductor layers adapted to a standing wave field for low insertion loss may be provided. The i section may comprise multiple-quantum-well structures, in which the quantum-confined Stark-effect may be used to allow changing of absorption characteristics by varying an applied blocking voltage potential.

A further aspect relates to a detection device for a device for determining a distance to an object comprising: a detection unit configured to receive a light beam; and a modulation unit comprising one or more first modulation sub-units, wherein each first modulation sub-unit is configured to convert one first part of the light beam into one converted first part of the light beam by amplitude modulating an optical power of the respective first part according to a first modulation signal, one or more second modulation sub-units, wherein each second modulation sub-unit is configured to convert one second part of the light beam into one converted second part of the light beam by amplitude modulating an optical power of the respective second part according to a second modulation signal, one or more third modulation sub-units, wherein each third modulation sub-unit is configured to convert one third part of the light beam into one converted third part of the light beam by amplitude modulating an optical power of the respective third part according to a third modulation signal; wherein the detection unit is configured to detect an optical signal power of each converted first part, converted second part, and converted third part of the light beam.

The detection unit may in particular comprise one or more of the features described for the detection unit and/or modulation unit described herein and/or shown in the Figures.

One aspect relates to a method for determining a distance to an object comprising: generating a primary modulation signal; emitting a light beam towards the object, wherein the light beam is amplitude modulated so as to have an amplitude modulated optical signal power according to the primary modulation signal; converting one first part of the light beam into one converted first part of the light beam by additionally amplitude modulating an optical power of the respective first part according to a first modulation signal, wherein the first modulation signal is obtained by phase shifting the primary modulation signal by a fixed first additional phase shift value; converting one second part of the light beam into one converted second part of the light beam by additionally amplitude modulating an optical power of the respective second part according to a second modulation signal, wherein the second modulation signal is obtained by phase shifting the primary modulation signal by a fixed second additional phase shift value; converting one third part of the light beam into one converted third part of the light beam by additionally amplitude modulating an optical power of the respective third part according to a third modulation signal, wherein the third modulation signal is obtained by phase shifting the primary modulation signal by a fixed third additional phase shift value, wherein the fixed first additional phase shift value, the fixed second additional phase shift value, and the fixed third additional phase shift value are different from one another; detecting an optical signal power of each converted first part, converted second part, and converted third part of the light beam scattered, diffracted, and/or reflected from the object; and determining a phase difference between the primary modulation signal and the detected optical signal power of each converted first part, converted second part, and converted third part; and determining the distance to the object based on the determined phase difference.

The method may in particular further comprise one or more of the features described for the device and/or detection device described herein and/or shown in the Figures.

The invention will now be further explained in relation to exemplary embodiments illustrated in the appended Figures. In particular, the present disclosure is not to be interpreted as being limited to the exemplary embodiments shown in the Figures and described below. In particular, the Figures show:

| Figure 1: | a schematic diagram of an exemplary device for determining a distance to an object; |
|---|---|
| Figure 2A: | a graphical representation of a transmission characteristic of an exemplary modulation unit; |
| Figure 2B: | a schematic side view of an embodiment of the device according to Figure 1; |
| Figure 3: | an exemplary method to obtain stereoscopic depth information by the distance |

determination unit based on the exemplary embodiment of Figure 2B;

Figure 4:                                   a schematic side view of a further embodiment of the device according to Figure 1;
Figure 5A:                                  a schematic diagram of a modulation unit with a modulation sub-unit control unit;
Figure 5B:                                  a schematic diagram of a modulation unit with a modulation sub-unit control unit;
Figure 5C:                                  a schematic diagram of a modulation unit with a modulation sub-unit control unit;
Figure 6:                                   an exemplary detection device comprising a modulation unit configured as a modulation unit chip;
Figure 7:                                   a top and side view of an exemplary detection device comprising a modulation unit configured as a modulation chip and a detection unit;
Figures 8A and 8B:                          cross-sectional views of exemplary modulation unit structures
Figure 9:                                   a schematic side view of a further embodiment of the device according to Figure 1;
Figure 10:                                  an exemplary method of determining a distance to an object, which in this case is a flat object;
Figures 11A, 11B, 11C, and 11D:             an exemplary modulation unit comprising P modulation stripe arrays;
Figure 12:                                  a flow chart of an exemplary method of determining a distance to an object;
Figure 13                                   an exemplary reflection electro-absorption modulation unit with an exemplary additional beam directing element.

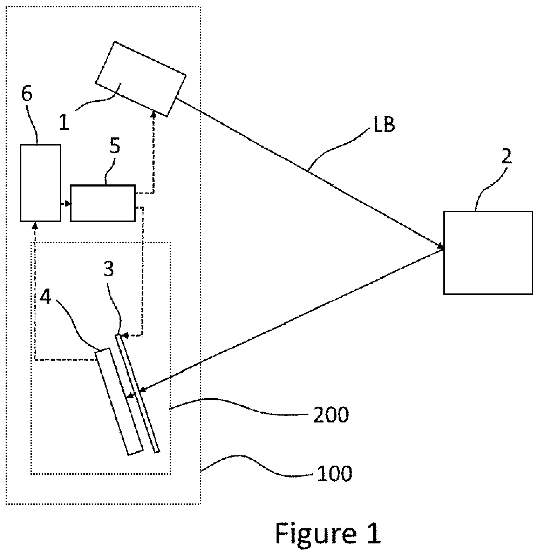

**Figure 1** shows a schematic diagram of an exemplary device **100** for determining a distance to an object **2**. The device **100** comprises a modulation signal generation unit **5** configured to generate a primary modulation signal and an emission unit **1** configured to emit a light beam **LB** towards the object **2,** wherein the emission unit **1** is further configured to amplitude modulate the light beam **LB** so as to have an amplitude modulated optical signal power according to the primary modulation signal. In particular, the modulation signal generation unit **5** may be configured to provide the generated primary modulation signal to the emission unit **1** and/or the modulation unit **3**.

The device **100** further comprises a detection unit **4** configured to receive the light beam **LB** scattered, diffracted, and/or reflected by the object **2** and a modulation unit **3** comprising one or more first modulation sub-units **31**, wherein each first modulation sub-unit **31** is configured to convert one first part of the light beam **LB** into one converted first part of the light beam **LB** by additionally amplitude modulating an optical power of the respective first part according to a first modulation signal, wherein the first modulation signal is obtained by phase shifting the primary modulation signal by a fixed first additional phase shift value.

The modulation unit **3** further comprises one or more second modulation sub-units **32**, wherein each second modulation sub-unit **32** is configured to convert one second part of the light beam **LB** into one converted second part of the light beam **LB** by additionally amplitude modulating an optical power of the respective second part according to a second modulation signal, wherein the second modulation signal is obtained by phase shifting the modulation signal by a fixed second additional phase shift value, and one or more third modulation sub-units **33**, wherein each third modulation sub-unit **33** is configured to convert one third part of the light beam **LB** into one converted third part of the light beam **LB** by additionally amplitude modulating an optical power of the respective third part according to a third modulation signal, wherein the third modulation signal is obtained by phase shifting the primary modulation signal by a fixed third additional phase shift value.

Furthermore, the detection unit **4** is configured to detect an optical signal power of each converted first part, converted second part, and converted third part of the light beam **LB** scattered, diffracted, and/or reflected from the object **2**.

The device **100** further comprises a distance determination unit **6** configured to determine a phase difference between the primary modulation signal and the detected optical signal power of each converted first part, converted second part, and converted third part, wherein the distance determination unit **6** is configured to determine the distance to the object **2** based on the determined phase difference. In particular, the distance determination unit **6** may be further configured to determine a distance travelled by the light beam **LB** from the emission unit to the object **2** and back to the detection unit **4**, and to provide the determined distance travelled to the modulation signal generation unit **5**.

Furthermore, the modulation unit **3** and the detection unit **4** may be implemented as a detection device **200**.

The exemplary object **2** is in particular an external object **2**, wherein the device **100** is directable and/or orientable towards the external object **2** such that the light beam **LB** emitted by the emission unit **1** is reflected scattered, diffracted, and/or by the object **2** and subsequently detected by the detection unit **4**. While the object **2** is shown for illustrative purposes as a single object **2**, said object **2** may comprise one or more sub-objects.

The detection unit **4** is further shown for illustrative purposes as a single detection unit **4**. However, the detection unit **4** may in particular comprise one or more detectors configured to detect electromagnetic radiation. In particular, the one or more detectors may be configured to measure at least an optical power and/or intensity of a light beam **LB** incident on the detection unit **4**, preferentially as an average over time.

In particular, the detection unit **4** is configured to detect an optical signal power of each converted first part, converted second part, and converted third part of the light beam **LB** scattered, diffracted, and/or reflected from the object simultaneously.

The modulation unit **3** is in particular arranged along the beam path of the light beam **LB** scattered, diffracted, and/or reflected from the object **2** between the detection unit **4** and the object **2**. In addition, the exemplary modulation unit **3** shown in Figure 1 is implemented as a transmission electro-absorption modulator. However, other types of modulators may be used instead, such as for example reflection electro-absorption modulators.

In the shown exemplary device **100** of Figure 1, the emission unit **1** is arranged at a first location and the detection unit **4** and the modulation unit **3** are arranged at a second location, wherein the distance determination unit **6** is configured to determine an adjusted distance to the object **2** based on the determined distance to the object **2,** the first position, and the second position. However, a distance between the first location and the second location may be small, in particular small in comparison to a distance travelled by the light beam **LB** from the emission unit **1** to the object **2** and back to the detection unit **4**. Therefore, as an approximation, the first location may be considered substantially identical to the second position, thereby simplifying the determination of the adjusted distance to the object **2.**

**Figure 2A** shows a graphical representation of a transmission characteristic, such as an optical power transmission coefficient or an intensity transmission coefficient, of an exemplary modulation unit **3**, wherein the modulation unit **3** is configured as a transmission-type electro-absorption modulator. In particular, the transmission is illustrated as a function of the phase, wherein the fixed first to fourth additional phase shift values are illustrated as being 0°, 90°, 180°, and 270°, respectively.

**Figure 2B** shows a schematic side view of an embodiment of the device **100** according to Figure 1. Specifically, Figure 2B shows a schematic side view of a part of a device **100** between the object **2** and the detection unit **4**.

The device **100** comprises a collimator lens unit **7**, wherein the collimator lens unit **7** comprises a collimator lens. The collimator lens unit **7** is configured to collimate the light beam **LB** scattered, diffracted, and/or reflected from the object **2**, and to project the collimated light beam **LB** onto an aperture and the modulation unit **3**. In particular, an edge of the modulation unit **3** may define, such as in the shown example of Figure 2B, the outer edge of the aperture. Furthermore, the collimator lens unit **7** is configured to collimate the scattered, diffracted, and/or reflected light beam **LB** to substantially fully illuminate the modulation unit **3**. In particular, the collimator lens unit **7** may be arranged at a distance $f_{Koll}$ from the object **2** along the path of the light beam **LB** scattered, diffracted, and/or reflected from the object **2**.

The modulation unit **3** is disposed at a distance of $d_{Koll}$ from the collimator lens unit **7**. In particular, the modulation unit **3** may therefore be arranged substantially along and/or in a pupil plane corresponding to a Fourier plane of the device **100**. In particular, the modulation unit **3** comprises one first modulation sub-unit **31**, one second modulation sub-unit **32**, one third modulation sub-unit **33**, and one fourth modulation sub-unit **34**, wherein each of the first modulation sub-unit **31**, second modulation sub-unit **32**, third modulation sub-unit **33**, and fourth modulation sub-unit **34** is configured such that a respective image of the object **2** is formed for each respective converted part of the light beam **LB** on a separate section of the detection unit **4**. Furthermore, the one first modulation sub-unit **31**, one second modulation sub-unit **32,** one third modulation sub-unit **33**, and one fourth modulation sub-unit **34** are arranged in a 2x2 array. In particular, the modulation unit **3**, exemplarily implemented as a 2x2 modulator array, may be placed in a 2x2 image plane generated via the focusing lens unit **8**, exemplarily implemented as a 2x2 lens array, described in further detail below. Furthermore, the modulation unit and the modulation sub-units **31** to **34** are substantially planar. It is further noted that each modulation sub-unit is arranged substantially adjacent to at least one other modulation sub-unit. In the modulation unit **3** shown in Figure 2B for example, the first modulation sub-unit **31** is arranged substantially adjacent to the second modulation sub-unit **32** and the third modulation sub-unit **33**. A shown separation distance between any two adjacent modulation sub-units shown in Figure 2B is not to scale however.

In the illustrated example, the fixed first additional phase shift value is 0°, the fixed second additional phase shift value is 90°, the fixed third additional phase shift value is 180°, and the fixed fourth additional phase shift value is 270°. In particular, by choosing the fixed first to fourth additional phase shift values in such a manner the determination of the phase difference may be significantly facilitated, as discussed in relation to equations (13) to (18) above.

Furthermore, the detection unit **4** comprises a first plurality of sensor pixels, a second plurality of sensor pixels, a third plurality of sensor pixels, and a fourth plurality of sensor pixels. In particular, the first modulation sub-unit **31** is configured such that the converted first part of the light beam **LB** is incident on the first plurality of sensor pixels. In particular, the second modulation sub-unit **32** is configured such that the converted second part of the light beam **LB** is incident on the second plurality of sensor pixels. In particular, the third modulation sub-unit **33** is configured such that the converted third part of the light beam **LB** is incident on the third plurality of sensor pixels. In particular, the fourth modulation sub-unit **34** configured such that the converted fourth part of the light beam **LB** is incident on the fourth plurality of sensor pixels. Thereby it is possible to efficiently obtain a detailed depth information map of the object **2**.

The device **100** further comprises a focusing lens unit **8**. The focusing lens unit **8** is in particular arranged at a distance of $d_{Fok}$ from the modulation unit **3** and at a distance $f'_{Fok}$ from the detection unit **4**. The focusing lens unit **8** comprises a first focusing lens, wherein the first focusing lens is configured to focus the converted first part of the light beam **LB** scattered, diffracted, and/or reflected from the object **2** onto the first plurality of sensor pixels. The focusing lens unit **8** further comprises a second focusing lens, wherein the second focusing lens is configured to focus the converted second part of the light beam **LB** scattered, diffracted, and/or reflected from the object **2** onto the second plurality of sensor pixels. The device **100** may further comprise a third focusing lens, wherein the third focusing lens is configured to focus the converted third part of the light beam **LB** scattered, diffracted, and/or reflected from the object **2** onto the third plurality of sensor pixels. The device **100** may further comprise a fourth focusing lens, wherein the fourth focusing lens is configured to focus the converted fourth part of the light beam **LB** scattered, diffracted, and/or reflected from the object **2** onto the fourth plurality of sensor pixels. Furthermore, the first focusing lens, the second focusing lens, the third focusing lens, and the fourth focusing lens may be arranged in a 2x2 array.

The distance determination unit **6** may further be configured to compare the images obtained by each of the first plurality of sensor pixels, the second plurality of sensor pixels, the third plurality of sensor pixels, and the fourth plurality of sensor pixels to obtain additional stereoscopic depth information of the object **2**.

The distances $d_{Koll}$ and $d_{Fok}$ may for example by chosen to provide a telecentric imaging of the object **2** onto the detection unit **4**.

Likewise, the modulation unit **3** may be positioned in the image plane generated via the focusing lens unit **8**, at which each of the four respective images is subjected to a different transparency of the modulation unit **3**.

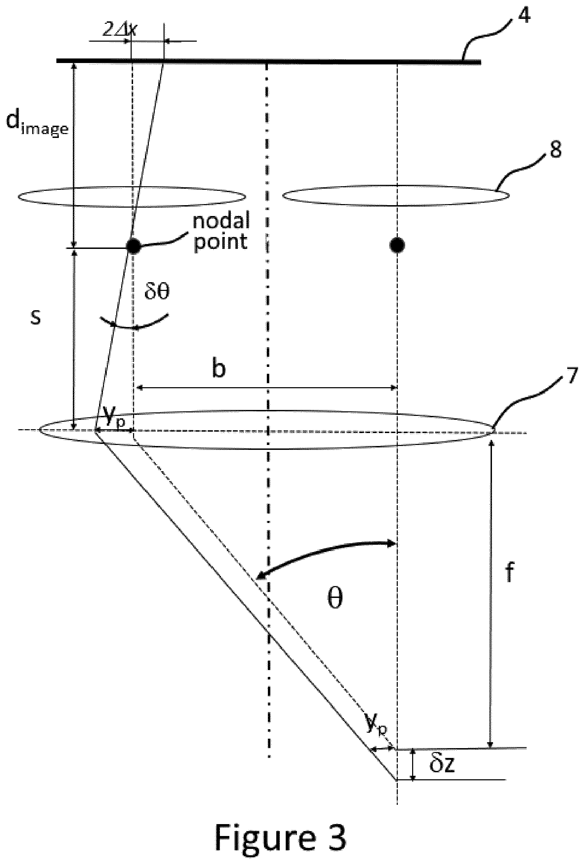

**Figure 3** shows an exemplary method to obtain stereoscopic depth information by the distance determination unit **6** based on the exemplary embodiment of Figure 2B. In particular, the distance determination unit **6** is configured to compare the images obtained by each of the first plurality of sensor pixels, the second plurality of sensor pixels, the third plurality of sensor pixels, and the fourth plurality of sensor pixels to obtain additional stereoscopic depth information of the object **2**. Specifically, $\delta\theta$ may be a minimum stereo angle of the device **100**, $\theta$ may be a convergence angle, $\Delta x$ may be a sensor pixel size, $f$ may be a focal length of the main objective and/or the collimator lens unit **7**, $s$ may be a distance between a nodal point and the principal planes of the main objective and/or the collimator lens unit **7**, $d_{image}$ may be a distance between the nodal point and the detection unit **4**, $b$ may be a baseline of the stereoscopic system, and $y_p$ may be a parallactic difference.

Therefore:

$$\tan(\delta\theta) = \frac{2\Delta x}{d_{image}} = \frac{y_p}{s} \tag{22}$$

and consequently:

$$y_p = \frac{2\Delta x * s}{d_{image}} \tag{23}$$

Furthermore:

$$\tan(\theta) = \frac{b}{f} = \frac{y_p}{\delta z} \tag{24}$$

Consequently:

$$\delta Z = \frac{f * y_p}{b} = \frac{f}{b} * \frac{2\Delta x * s}{d_{image}} \tag{24}$$

Therefore, the distance determination unit **6** may be configured to additionally determine depth information $\delta_z$ of the object **2**.

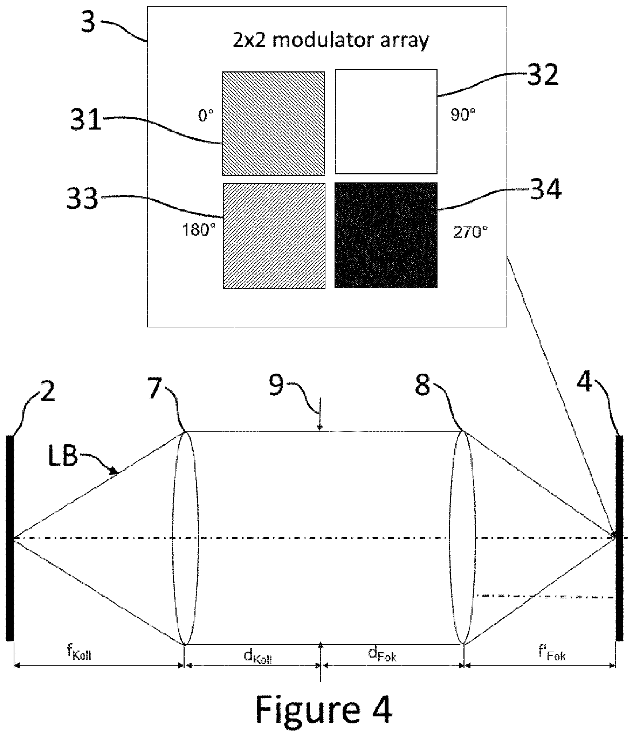

**Figure 4** shows a schematic side view of a further embodiment of the device **100** according to Figure 1. Specifically, Figure 4 shows a schematic side view of a part of a device **100** between the object **2** and the detection unit **4**.

The device **100** comprises a collimator lens unit **7**, wherein the collimator lens unit **7** comprises a collimator lens. The collimator lens unit **7** is configured to collimate the light beam **LB** scattered, diffracted, and/or reflected from the object **2**, and to project the collimated light beam **LB** onto an aperture **9**. The aperture **9** is in particular positioned between the collimator lens unit **7** and the focusing lens unit **8**. In particular, the collimator lens unit **7** may be arranged at a distance $f_{Koll}$ from the object **2** along the path of the light beam **LB** scattered, diffracted, and/or reflected from the object **2** and at a distance $d_{Koll}$ from the aperture **9**.

The device **100** further comprises a focusing lens unit **8**. The focusing lens unit **8** is in particular arranged at a distance of $d_{Fok}$ from the aperture **9** and at a distance $f'_{Fok}$ from the modulation unit **3** and the detection unit **4**. The focusing lens unit **8** comprises a single focusing lens, wherein the single focusing lens is configured to focus the light beam **LB** scattered, diffracted, and/or reflected from the object **2** onto the modulation unit **3**.

The modulation unit **3** is disposed proximal to, preferably directly proximal to the detection unit **4**.

The modulation unit **3** comprises a plurality of modulation arrays, wherein each modulation array is a 2x2 array of one first modulation sub-unit **31**, one second modulation sub-unit **32**, one third modulation sub-unit **33**, and one fourth modulation sub-unit **34**. The modulation unit **3** is arranged proximal to the detection unit **4** such that each one of the first modulation sub-units **31**, second modulation sub-units **32**, third modulation sub-units **33**, and fourth modulation sub-units **34** corresponds to one sensor pixel of the detection unit **4**, respectively. In other words, the modulation unit **3** is arranged proximal to the detection unit **4** such that for each 2x2 array the respective first to fourth converted parts of the light beam **LB** are imaged onto separate sensor pixels of the detection unit **4**. Subsequently, the distance determination unit **6** may be configured to determine a distance to the object for each 2x2 array, specifically based on equations (13) to (18) above. In addition, the modulation unit **3** comprises the plurality of modulation arrays such that every sensor pixel of the detection unit **4** is associated with one of the modulation sub-units **31** to **34**. A shown separation distance between any two adjacent modulation sub-units shown in Figure 4 is not to scale however.

In the illustrated example, the fixed first additional phase shift value is 0°, the fixed second additional phase shift value is 90°, the fixed third additional phase shift value is 180°, and the fixed fourth additional phase shift value is 270°. In particular, by choosing the fixed first to fourth additional phase shift values in such a manner the determination of the phase difference may be significantly facilitated, as discussed in relation to equations (13) to (18) above.

Furthermore, the detection unit **4** comprises a plurality of sensor pixels to detect and/or receive the converted first parts of the light beam **LB**, the converted second parts of the light beam **LB**, the converted third parts of the light beam **LB**, and the fourth parts of the light beam **LB**. Thereby it is possible to efficiently obtain a detailed depth information map of the object **2**. In particular, the distance determination unit **6** may be configured to generate the detailed depth information map of the object **2** by assigning a determined distance for each 2x2 array to a map image point, wherein a location of each map image point may correspond to a location of the 2x2 array on the modulation unit **3** and/or the detection unit **4**.

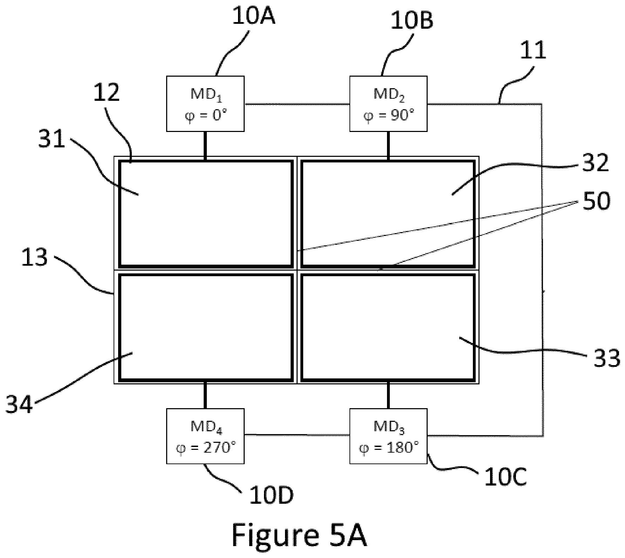

**Figure 5A** shows a schematic diagram of a modulation unit **3** with a modulation sub-unit control unit. In particular, the modulation unit **3** is illustrated for simplicity as comprising one first modulation sub-unit **31**, one second modulation sub-unit **32**, one third modulation sub-unit **33**, and one fourth modulation sub-unit **34**. Furthermore, the one first modulation sub-unit **31**, one second modulation sub-unit **32**, one third modulation sub-unit **33**, and one fourth modulation sub-unit **34** are arranged in a 2x2 array.

In the illustrated example, the fixed first additional phase shift value is 0°, the fixed second additional phase shift value is 90°, the fixed third additional phase shift value is 180°, and the fixed fourth additional phase shift value is 270°.

In particular, the modulation sub-unit control unit comprises a first modulator driver **10A** configured to provide the first modulation signal to the first modulation sub-unit **31** to control a transmittance of the first modulation sub-unit **31**. The modulation sub-unit control unit comprises a second modulator driver **10B** configured to provide the second modulation signal to the second modulation sub-unit **32** to control a transmittance of the second modulation sub-unit **32**. The modulation sub-unit control unit comprises a third modulator driver **10C** configured to provide the third modulation signal to the third modulation sub-unit **33** to control a transmittance of the third modulation sub-unit **33**. The modulation sub-unit control unit comprises a fourth modulator driver **10D** configured to provide the fourth modulation signal to the fourth modulation sub-unit **34** to control a transmittance of the fourth modulation sub-unit **34**.

Each modulation sub-unit **31** to **34** is separated from its adjacent modulation sub-units by at least one isolation trench **50** configured to electrically isolate the respective modulation sub-units. Furthermore, each modulator driver **10A-D** is connected to the respective modulation sub-unit **31** to **34** by a contact ring **12** disposed on the respective modulation sub-unit **31** to **34**. In particular, each contact ring **12** may substantially follow the edge of the respective modulation sub-unit **31** to **34** along one or more isolation trenches **50** and/or a modulation unit chip edge **13**. The first modulator driver **10A**, the second modulator driver **10B**, the third modulator driver **10C**, and the fourth modulator driver **10D** may further be connected to one another by a connection line **11**, wherein the connection line **11** may be configured to synchronise the first modulator driver **10A**, the second modulator driver **10B**, the third modulator driver **10C**, and the fourth modulator driver **10D**.

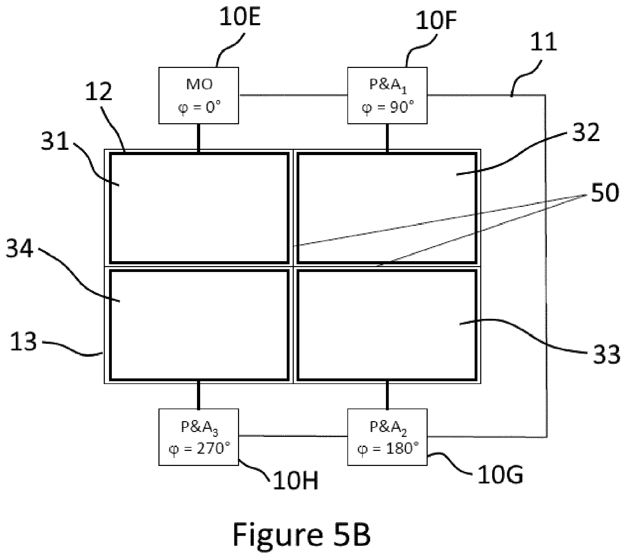

**Figure 5B** shows a schematic diagram of a modulation unit **3** with a modulation sub-unit control unit. In particular, the modulation unit **3** is illustrated for simplicity as comprising one first modulation sub-unit **31**, one second modulation sub-unit **32**, one third modulation sub-unit **33**, and one fourth modulation sub-unit **34**. Furthermore, the one first modulation sub-unit **31**, one second modulation sub-unit **32**, one third modulation sub-unit **33**, and one fourth modulation sub-unit **34** are arranged in a 2x2 array.

In the illustrated example, the fixed first additional phase shift value is 0°, the fixed second additional phase shift value is 90°, the fixed third additional phase shift value is 180°, and the fixed fourth additional phase shift value is 270°.

In particular, the modulation sub-unit control unit comprises a master oscillator **10E** configured to provide the first modulation signal to the first modulation sub-unit **31** to control a transmittance of the first modulation sub-unit **31.** The modulation sub-unit control unit comprises a first phase shifting and amplitude levelling unit **10F** configured to receive the first modulation signal from the master oscillator **10E**, generate the second modulation signal based on the first modulation signal, and provide the second modulation signal to the second modulation sub-unit **32** to control a transmittance of the second modulation sub-unit **32.** The modulation sub-unit control unit comprises a second phase shifting and amplitude levelling unit **10G** configured to receive the first modulation signal from the master oscillator **10E**, generate the third modulation signal based on the first modulation signal, and provide the third modulation signal to the third modulation sub-unit **33** to control a transmittance of the third modulation sub-unit **33.** The modulation sub-unit control unit comprises a third phase shifting and amplitude levelling unit **10H** configured to receive the first modulation signal from the master oscillator **10E**, generate the fourth modulation signal based on the first modulation signal, and provide the fourth modulation signal to the fourth modulation sub-unit **34** to control a transmittance of the fourth modulation sub-unit **34.** In particular, the master oscillator **10F**, the first phase shifting and amplitude levelling unit **10F**, the second phase shifting and amplitude levelling unit **10G**, and the third phase shifting and amplitude levelling unit **10F** may in particular be connected to one another via the connection line **11**.

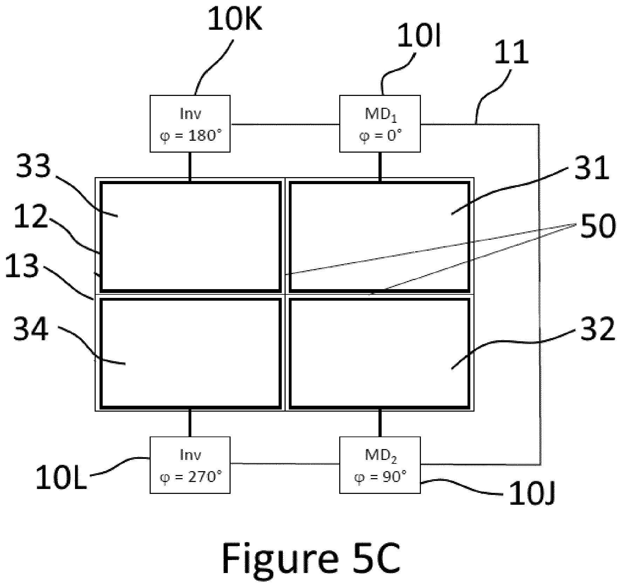

**Figure 5C** shows a schematic diagram of a modulation unit **3** with a modulation sub-unit control unit. In particular, the modulation unit **3** is illustrated for simplicity as comprising one first modulation sub-unit **31**, one second modulation sub-unit **32**, one third modulation sub-unit **33**, and one fourth modulation sub-unit **34.** Furthermore, the one first modulation sub-unit **31**, one second modulation sub-unit **32,** one third modulation sub-unit **33**, and one fourth modulation sub-unit **34** are arranged in a 2x2 array.

In the illustrated example, the fixed first additional phase shift value is 0°, the fixed second additional phase shift value is 90°, the fixed third additional phase shift value is 180°, and the fixed fourth additional phase shift value is 270°.

In particular, the modulation sub-unit control unit comprises a first modulator driver **10I** configured to provide the first modulation signal to the first modulation sub-unit **31** to control a transmittance of the first modulation sub-unit **31.** In particular, the modulation sub-unit control unit comprises a second modulator driver **10J** configured to provide the second modulation signal to the second modulation sub-unit **32** to control a transmittance of the second modulation sub-unit **32.** The modulation sub-unit control unit comprises a first inverter unit **10K** configured to receive the first modulation signal from the first modulator driver **10I**, generate the third modulation signal by inverting the first modulation signal, and provide the third modulation signal to the third modulation sub-unit **33** to control a transmittance of the third modulation sub-unit **33.** The modulation sub-unit control unit comprises a second inverter unit **10L** configured to receive the second modulation signal from the second modulator driver **10J**, generate the fourth modulation signal by inverting the second modulation signal, and provide the fourth modulation signal to the fourth modulation sub-unit **34** to control a transmittance of the fourth modulation sub-unit **34.** In particular, the first modulator driver **10I** and the second modulator driver **10J** may be connected to one another via connection line **11**, wherein the connection line **11** may be configured to synchronise the first modulator driver **10I** and the second modulator driver **10J.**

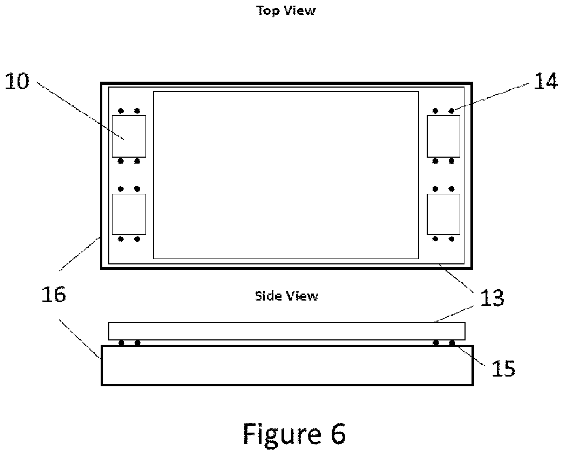

**Figure 6** shows an exemplary detection device **200** comprising a modulation unit **3** configured as a modulation unit chip. The modulation unit chip is fabricated from one or more semiconductor materials with a direct energy bandgap. The detection unit **4** may be implemented as a custom-fabricated image sensor ASIC **16**, wherein the ASIC 16 may typically be silicon-based.

In particular, the modulation unit chip may be placed directly on the detection unit **4** by means of a flip-chip bonding process. In particular, the modulation unit chip and/or the detection unit **4** comprise a plurality of flip-chip bond contact pads **14** and/or flip chip solder balls **15.**

Furthermore, electronic components **10** of the modulation unit chip, such as for example the modulation sub-unit control unit, are integrated onto the ASIC **16**. The electronic components **10** may be arranged on the ASIC **16** such that said electronic components **10** may be arranged substantially within the modulation unit chip edges **13** when viewed perpendicular to the modulation unit chip mounted on the ASIC **16.**

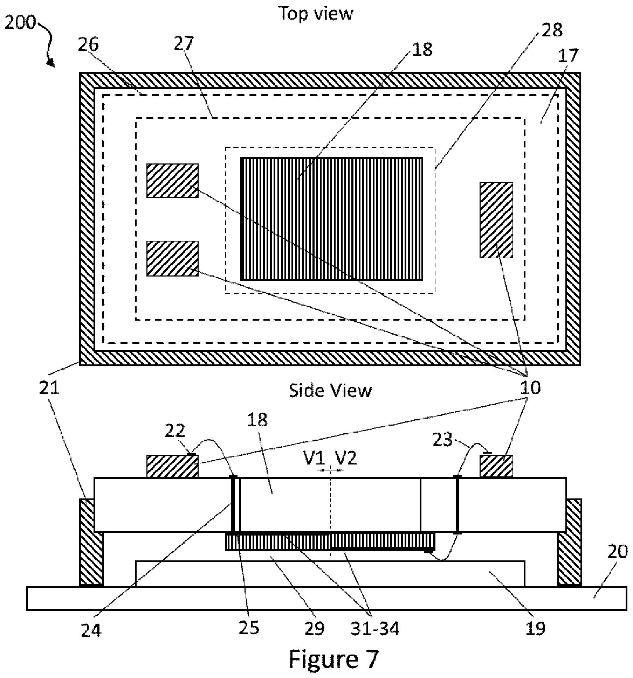

**Figure 7** shows a top and side view of an exemplary detection device **200** comprising a modulation unit **3** configured as a modulation chip and a detection unit **4.** In particular, the modulation unit **3** may be implemented as an electro-absorption modulator. The modulation unit **3** may in particular be mounted on a printed circuit board **17**. Electronic components **10**, such as a modulation sub-unit control unit, may be mounted on the printed circuit board **17**. In particular, the modulation unit **3** and the electronic components **10** may be mounted on opposite sides of the printed circuit board **17.** The printed circuit board **17** may further comprise an optical window **18**, wherein the modulation unit **3** may be aligned with the optical window **18** to be visible through the optical window **18.**

The detection unit **4** may comprise a detector **19** mounted on a detector printed circuit board **20.** The printed circuit board **17** may be fixed to and/or mounted on the detector printed circuit board **20** via a frame **21**, such as by means of a Chip-on-Board process.

In order to further illustrate the relative arrangement of the modulation unit **3** and the detection unit **4**, the top view of Figure 7 contains an inner-edge-of-the-frame indication **26**, an edge-of-the-detector indication **27**, and an edge-of-the-modulation-unit-chip indication **28**.

In the side view section of Figure 7, a left-hand side (labelled as V1) shows an embodiment wherein one or more modulation sub-units **31** to **34** are mounted on a surface of the modulation unit **3** facing away from the detection unit **4**. On the left-hand side, a connection between the electronic component **10** and the modulation unit **3** may comprise a bond pad **22** on the electronic component **10**, a bond wire **23** connected to the bond pad **22**, a through connection **24** through the printed circuit board **17** and a solder interface **25** on the modulation unit **3**.

A right-hand side (labelled as V2) shows an embodiment wherein one or more modulation sub-units **31** to **34** are mounted on a surface of the modulation unit **3** facing towards the detection unit **4**. On the right-hand side, a connection between the electronic component **10** and the modulation unit **3** may comprise a bond pad **22** on the electronic component **10**, a bond wire **23** connected to the bond pad **22**, a through connection **24** through the printed circuit board **17**, a further bond wire **23**, and a further bond pad **22** on the modulation unit **3**.

In addition, modulation unit **3** and detection unit **4** may be mounted such that an air gap **29** exists between the modulation unit **3** and the detection unit **4**.

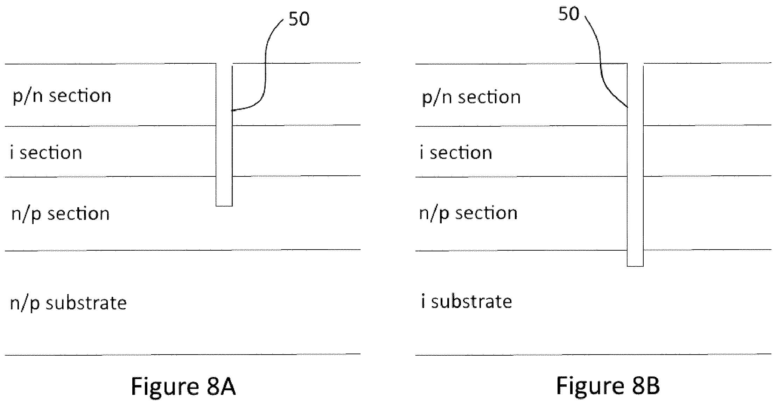

**Figures 8A** and **8B** show cross-sectional views of exemplary modulation unit structures. In particular, in the cross-section according to Figure 8A, control of the modulation unit and/or the modulation sub-units may be undertaken over a common anode (e.g. n-doped substrate with application of a blocking potential to the modulation unit and/or modulation sub-units, i.e. a potential applied to the n-doped substrate is more positive than a potential applied to the uppermost p-doped section) or cathode (e.g. p-doped substrate). In such a case, the isolation trenches **50** are provided to extend into a layered structure of the modulation unit through a p/n section, an i (intrinsic) section and into a n/p section. In the shown example, the isolation trenches do not need to extend into a n/p substrate of the modulation unit. In particular, the in the cross-section according to Figure 8B, full potential separation of all modulation sub-units is implemented. In such a case, the isolation trenches **50** are provided to extend into a layered structure of the modulation unit through a p/n section, an i section, a n/p section, and into a i substrate.

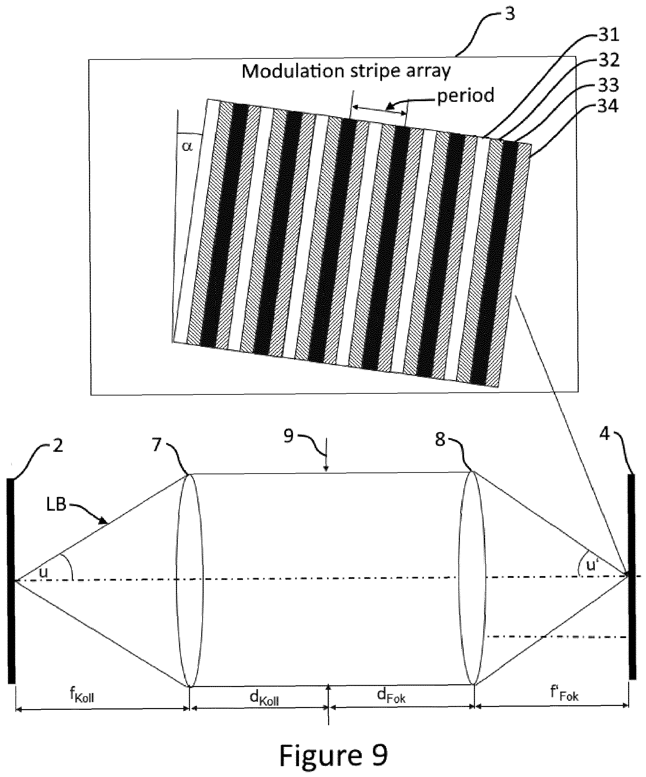

**Figure 9** shows a schematic side view of a further embodiment of the device **100** according to Figure 1. Specifically, Figure 9 shows a schematic side view of a part of a device **100** between the object **2** and the detection unit **4**.

The device **100** comprises a collimator lens unit **7**, wherein the collimator lens unit **7** comprises a collimator lens. The collimator lens unit **7** is configured to collimate the light beam **LB** scattered, diffracted, and/or reflected from the object **2**, and to project the collimated light beam **LB** onto an aperture **9**. The aperture **9** is in particular positioned between the collimator lens unit **7** and the focusing lens unit **8**. In particular, the collimator lens unit **7** may be arranged at a distance $f_{Koll}$ from the object **2** along the path of the light beam **LB** scattered, diffracted, and/or reflected from the object **2** and at a distance $d_{Koll}$ from the aperture **9**.

The device **100** further comprises a focusing lens unit **8**. The focusing lens unit **8** is in particular arranged at a distance of $d_{Fok}$ from the aperture **9** and at a distance $f'_{Fok}$ from the modulation unit **3** and the detection unit **4**. The focusing lens unit **8** comprises a single focusing lens, wherein the single focusing lens is configured to focus the light beam **LB** scattered, diffracted, and/or reflected from the object **2** onto the modulation unit **3**.

The modulation unit **3** is disposed proximal to, preferably directly proximal to the detection unit **4**.

The modulation unit **3** comprises P modulation stripe arrays, wherein each modulation stripe array is a 4x1 array of one first modulation sub-unit **31**, one second modulation sub-unit **32**, one third modulation sub-unit **33**, and one fourth modulation sub-unit **34**. In particular, each of the one first modulation sub-unit **31**, one second modulation sub-unit **32**, one third modulation sub-unit **33**, and one fourth modulation sub-unit **34** of each modulation stripe array are substantially rectangular having a long side and a short side, wherein the modulation sub-units **31** to **34** are aligned along their respective long sides in the respective modulation stripe array. In particular, the modulation unit **3** is therefore implemented as a Px1 array of the modulation stripe arrays. A periodicity, indicated as "period" in Figure 9, of the modulation sub-units **31** to **34** in the Px1 array may be chosen such that a maximal spatial frequency under an image side aperture angle **u'** of the detection unit **4** may be recorded and such that the periodicity may be scanned by at least two sensor pixels of the detection unit **4** according to the Nyquist criterium. Angle **u** is the object side aperture angle.

In particular, the Px1 array may be arranged proximal to the detection unit **4**. Furthermore, the Px1 array may be rotated around a rotation angle α with respect to the detection unit **4**. In particular, the Px1 array may be rotated by the rotation angle α around an axis perpendicular to the detection unit **4** and/or parallel to a propagation direction, in particular an average propagation direction, of the light beam **LB** scattered, diffracted, and/or reflected from the object **2**. In other words, each long side of the modulation sub-units of the Px1 array may form the rotation angle α with a side of the detection unit **4**. In particular, the rotation angle α may be chosen according to dimensions of the detection unit **4**, and may be further chosen to optimally use the detection unit's **4** space-bandwidth product and to achieve good separation of image terms and DC-term in Fourier space. In particular, the Px1 array may be configured to temporally amplitude modulate an optical power of the light beam, while a periodicity of the Px1 array may further cause a spatial modulation. The spatial modulation may therefore allow a determination of phase information, in particular the phase difference, in Fourier space. Specifically, the spatial modulation may cause a separation of the image component, twin image component, and the DC-component in Fourier space of the light beam detected by the detection unit **4**.

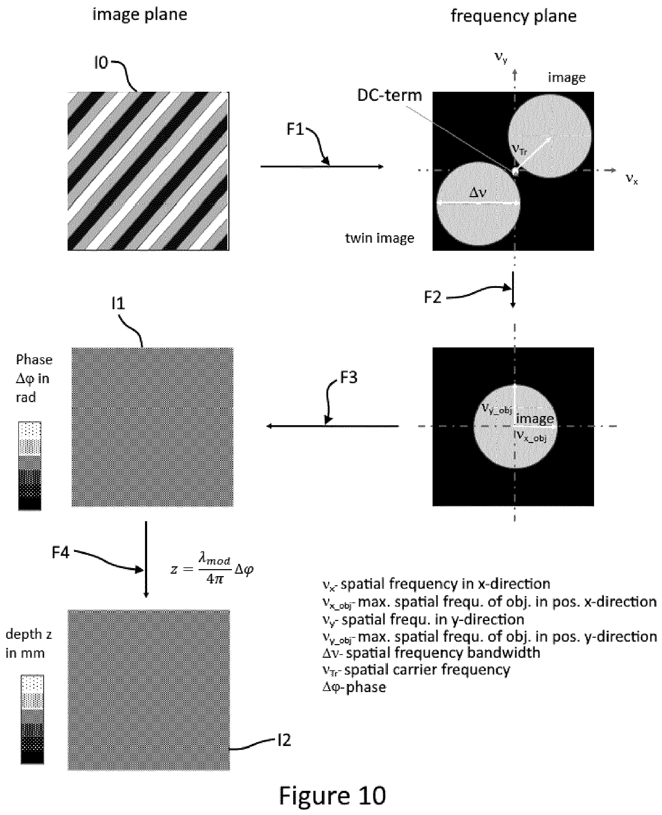

**Figure 10** illustrates an exemplary method of determining a distance to an object **2**, which in this case is a flat object.

An image **I0** of the object **2** is detected by the detection unit **4**. In a first step **F1**, the distance determination unit **6** is configured to perform a Fourier transform, preferentially a spatial Fourier transform, of the image of the object **2**. In a second step **F2**, the distance determination unit **6** is configured to isolate and center the image term of the Fourier transform of the image in Fourier space (minimization of the carrier frequency). In a third step **F3**, the distance determination unit **6** is configured to perform an inverse Fourier transform of the isolated and centered image term. Thereby, an image **I1** containing phase difference information of the object **2** is obtained. In a final step **F4**, the distance determination unit **6** is configured to determine the distance to the object **2** from the phase difference information. In particular, the distance determination unit **6** may therefore be able to generate a distance information map **I2** of the object **2**.

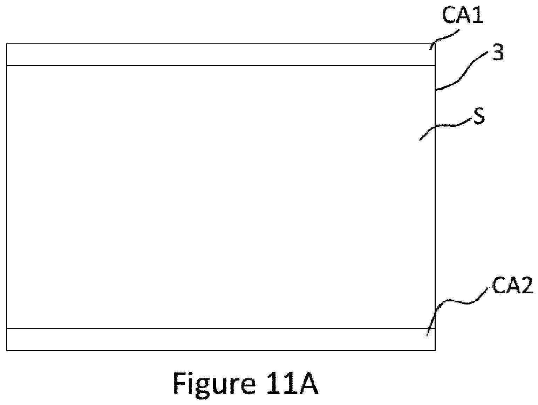

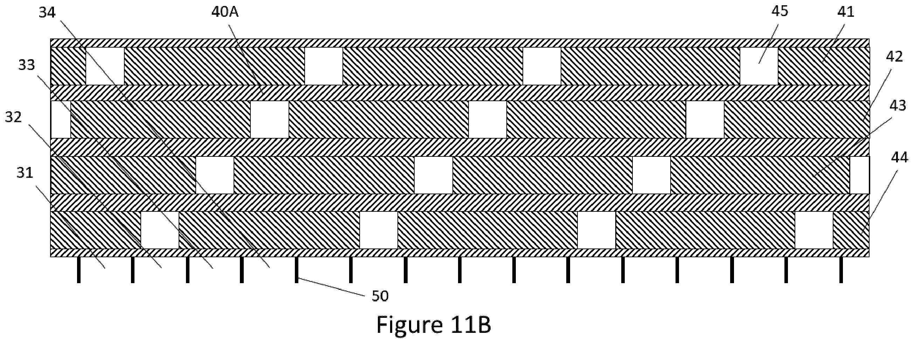

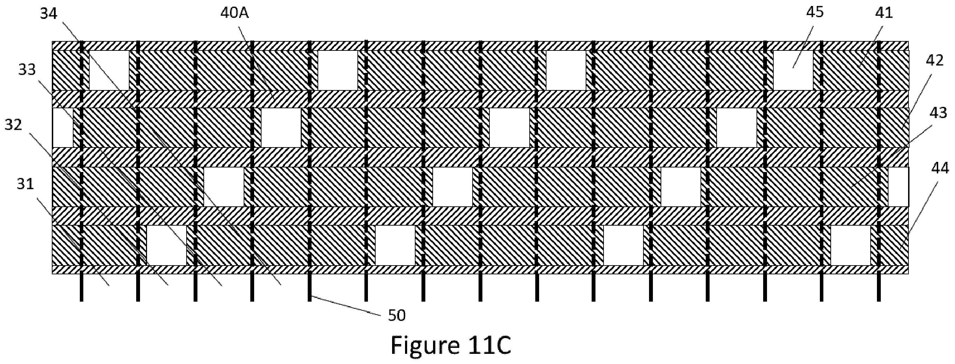

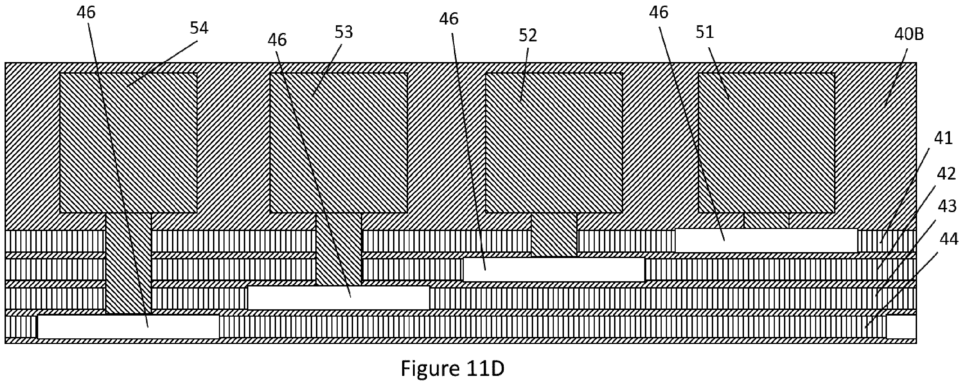

**Figures 11A, 11B, 11C,** and 11D show an exemplary modulation unit **3** comprising P modulation stripe arrays, wherein each modulation stripe array is a 4x1 array of one first modulation sub-unit **31,** one second modulation sub-unit **32,** one third modulation sub-unit **33**, and one fourth modulation sub-unit **34**, and wherein the modulation unit **3** is a Px1 array of the modulation stripe arrays. The modulation unit 3 is in particular implemented as a modulation unit chip, wherein the modulation unit chip comprises an upper contact area **CA1** and a lower contact area **CA2**. The upper contact area **CA1** and the lower contact area **CA2** are disposed on a same surface **S** of the modulation unit chip as the modulation stripe arrays. In particular, the upper contact area **CA1** and the lower contact area **CA2** are disposed on opposite sides of the modulation stripe arrays.

The upper contact area **CA1,** as shown in Figures 11B and 11C, comprises a first horizontal contact band **41,** wherein the first horizontal contact band **41** is configured to electrically contact each of the first modulation sub-units **31**. The shown upper contact area **CA1** comprises a second horizontal contact band **42,** wherein the second horizontal contact band **42** is configured to electrically contact each of the second modulation sub-units **32**. The shown upper contact area **CA1** comprises a third horizontal contact band **43,** wherein the third horizontal contact band **43** may be configured to electrically contact each of the third modulation sub-units **33**. The shown upper contact area **CA1** comprises a fourth horizontal contact band **44,** wherein the fourth horizontal contact band **44** is configured to electrically contact each of the fourth modulation sub-units **34**. Each horizontal contact band **41** to **44** is substantially perpendicularly arranged to the one or more modulation sub-units **31** to **34**. In particular, each horizontal contact band **41** to **44** may be substantially perpendicularly arranged to the long sides of the one or more modulation sub-units **31** to **34**.

Each horizontal contact band **41** to **44** is further at least partially disposed on a first passivation and/or isolation layer **40A.** The first passivation and/or isolation layer **40A** is disposed on at least a part of the one or more modulation sub-units **31** to **34** in the upper contact area **CA1**. The first passivation and/or isolation layer **40A** comprises one or more contact openings **45,** wherein each horizontal contact band **41** to **44** is configured to electrically contact one or more respective modulation sub-units **31** to **34** through the one or more contact openings **45** in the first passivation and/or isolation layer **40A.**

The modulation unit chip may further comprise one or more bond pads **51** to **54,** wherein each bond pad is connected to one of the horizontal contact bands **41** to **44** to allow electronic components **10,** such as the modulation sub-unit control unit, to contact and control the one or more modulation sub-units **31** to **34** connected to the respective horizontal contact band **41** to **44**. Each bond pad **51** to **54** is further at least partially disposed on a second passivation and/or isolation layer **40B.** The second passivation and/or isolation layer **40B** is disposed on at least a part of the one or more horizontal contact bands **41** to **44** in the upper contact area **CA1**. The second passivation and/or isolation layer **40B** comprises one or more bond pad openings **46,** wherein each bond pad **51** to **54** is configured to electrically contact one or more respective horizontal contact bands **41** to **44** through the one or more contact openings **46** in the second passivation and/or isolation layer **40B.**

Figures 11B and 11C further show exemplary isolation trenches **50.** In particular, each isolation trench **50** is configured to electrically isolate at least two modulation sub-units **31** to **34** from one another. In Figure 11B, the isolation trenches **50** are shown as hidden underneath the first passivation and/or isolation layer **40A** and the respective horizontal contact bands **41** to **44**. To also illustrate the location of the isolation trenches **50** in these positions, the isolation trenches **50** are shown in Figure 11C as dashed lines underneath the first passivation and/or isolation layer **40A** and the respective horizontal contact bands **41** to **44.**

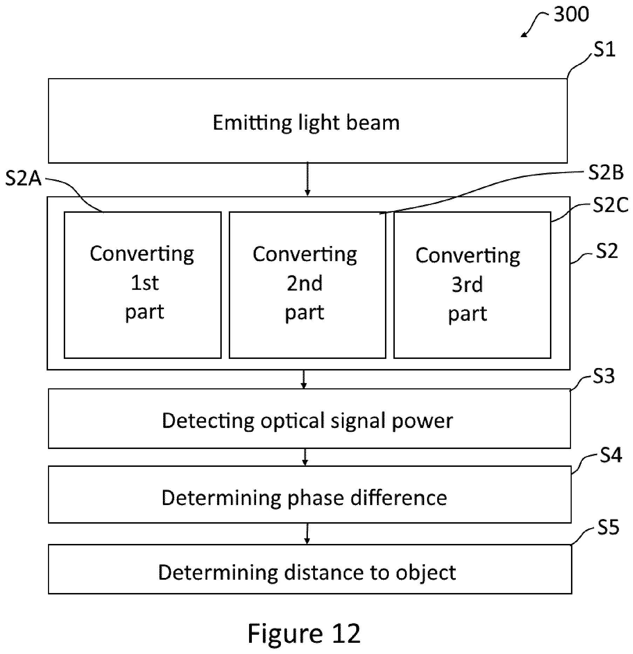

**Figure 12** shows a slow chart of an exemplary method **300** of determining a distance to an object **2.**

A first exemplary step **S1** comprises emitting a light beam towards the object, wherein the light beam is amplitude modulated so as to have an amplitude modulated optical signal power according to the primary modulation signal.

A second exemplary step **S2** comprises multiple sub-steps. A first exemplary sub-step **S2A** comprises converting one first part of the light beam into one converted first part of the light beam by additionally amplitude modulating an optical power of the respective first part according to a first modulation signal, wherein the first modulation signal is obtained by phase shifting the primary modulation signal by a fixed first additional phase shift value.

A second exemplary sub-step **S2B** comprises converting one second part of the light beam into one converted second part of the light beam by additionally amplitude modulating an optical power of the respective second part according to a second modulation signal, wherein the second modulation signal is obtained by phase shifting the primary modulation signal by a fixed second additional phase shift value.

A third exemplary sub-step **S2C** comprises converting one third part of the light beam into one converted third part of the light beam by additionally amplitude modulating an optical power of the respective third part according to a third modulation signal, wherein the third modulation signal is obtained by phase shifting the primary modulation signal by a fixed third additional phase shift value. In particular, the fixed first additional phase shift value, the fixed second additional phase shift value, and the fixed third additional phase shift value are different from one another.

A third exemplary step **S3** comprises detecting an optical signal power of each converted first part, converted second part, and converted third part of the light beam scattered, diffracted, and/or reflected from the object.

A fourth exemplary step **S4** comprises determining a phase difference between the primary modulation signal and the detected optical signal power of each converted first part, converted second part, and converted third part.

A fifth exemplary step **S5** comprises determining the distance to the object based on the determined phase difference.

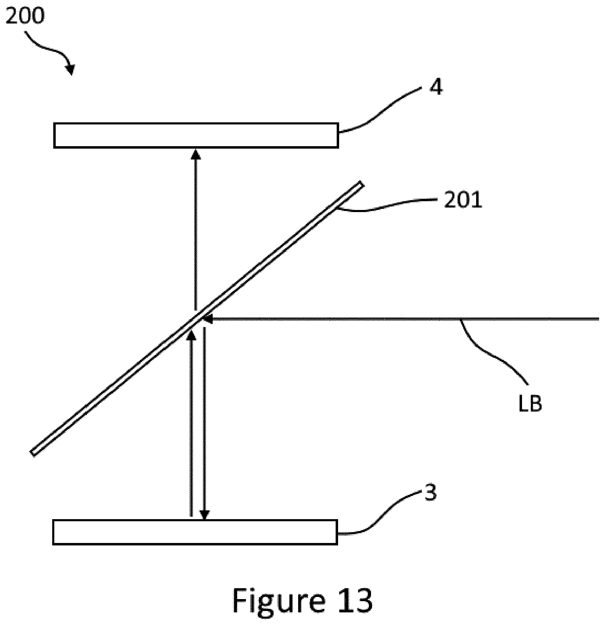

**Figure 13** shows an exemplary embodiment in which an exemplary modulation unit **3** is implemented as a reflection electro-absorption modulation unit, wherein the modulation unit **3** may be arranged along the path of the light beam **LB** between the object **2** and the detection unit **4,** and further configured to reflect the light beam **LB** onto the detection unit **4.**

The shown exemplary device **100** and/or the exemplary detection device **200** further comprises one or more additional beam directing elements **201,** wherein the one or more additional beam directing elements **201** may in particular be configured to at least partially change a direction of the light beam **LB** incident thereon. In the shown exemplary embodiment, the one or more additional beam directing elements **201** are configured as one or more 50/50 beam splitters. In particular, the exemplary one or more additional beam directing elements **201** are configured to at least partially reflect the light beam **LB** from the object **2** onto the modulation unit **3,** and are further configured to at least partially allow light reflected from the modulation unit **3** to pass to be incident on the detection unit **4.** Please note that the shown exemplary arrangement of one or more additional beam directing elements **201,** modulation unit **3,** and detection unit **4** is presented for illustrative grounds only, and the disclosure is therefore not to be limited thereto. In particular, other respective arrangements are also possible.

The herein described exemplary embodiments are not to be interpreted as limiting the scope of the invention. Instead, a device and/or method for determining a distance to an object according to the disclosure may comprise one or more of the herein described features.

**List of Reference Numerals**

| | |
|---|---|
| **100** | Device |
| **200** | Detection device |
| **300** | Method |
| **1** | Emission unit |
| **2** | Object |
| **3** | Modulation unit |
| **4** | Detection unit |
| **5** | Modulation signal generation unit |
| **6** | Distance determination unit |
| **7** | Collimator lens unit |
| **8** | Focusing lens unit |
| **9** | Aperture |
| **10A-10D, 10I, 10J** | Modulator driver |
| **10E** | Master oscillator |
| **10F, 10G, 10H** | Phase shifting and amplitude leveling unit |
| **10K, 10L** | Inverter unit |
| **11** | Connection line |
| **12** | Contact ring |
| **13** | Modulation unit chip edge |
| **14** | Flip-chip bond contact pads |
| **15** | Flip-chip solder balls |
| **16** | Custom-fabricated image sensor ASIC |
| **17** | Printed circuit board |

| 18 | Optical window |
| 19 | Detector |
| 20 | Detector printed circuit board |
| 21 | Frame |
| 22 | Bond pad |
| 23 | Bond wire |
| 24 | Through connection |
| 25 | Solder interface |
| 26, 27, 28 | Indicator |
| 29 | Air gap |
| 31 | First modulation sub-unit |
| 32 | Second modulation sub-unit |
| 33 | Third modulation sub-unit |
| 34 | Fourth modulation sub-unit |
| 40A, 40B | Passivation layer |
| 41-44 | Horizontal contact band |
| 45 | Contact opening |
| 46 | Bond pad opening |
| 50 | Isolation trench |
| 51-54 | Bond pads |
| 201 | Additional beam directing elements |
| LB | Light beam |
| I0,I1 | Image |
| I2 | Distance information map |
| F1-F4, S1-S5 | Steps |
| CA1 | Upper contact area |
| CA2 | Lower contact area |

## Claims

1. Device (100) for determining a distance to an object (2) comprising:

   a modulation signal generation unit (5) configured to generate a primary modulation signal;
   an emission unit (1) configured to emit a light beam (LB) towards the object (2), wherein the emission unit (1) is further configured to amplitude modulate the light beam (LB) so as to have an amplitude modulated optical signal power according to the primary modulation signal;
   a detection unit (4) configured to receive at least part of the light beam (LB) scattered, diffracted, and/or reflected by the object (2);
   a modulation unit (3) comprising:

   one or more first modulation sub-units (31), wherein each first modulation sub-unit (31) is configured to convert one first part of the light beam (LB) into one converted first part of the light beam (LB) by additionally amplitude modulating an optical power of the respective first part according to a first modulation signal, wherein the first modulation signal is obtained by phase shifting the primary modulation signal by a fixed first additional phase shift value,
   one or more second modulation sub-units (32), wherein each second modulation sub-unit (32) is configured to convert one second part of the light beam (LB) into one converted second part of the light beam (LB) by additionally amplitude modulating an optical power of the respective second part according to a second modulation signal, wherein the second modulation signal is obtained by phase shifting the modulation signal by a fixed second additional phase shift value,
   one or more third modulation sub-units (33), wherein each third modulation sub-unit (33) is configured to convert one third part of the light beam (LB) into one converted third part of the light beam (LB) by additionally amplitude modulating an optical power of the respective third part according to a third modulation signal, wherein the third modulation signal is obtained by phase shifting the primary modulation signal by a fixed third additional phase shift value,
   wherein the fixed first additional phase shift value, the fixed second additional phase shift value, and the fixed third additional phase shift value are different from one another;

24

wherein the detection unit (4) is configured to detect an optical signal power of each converted first part, converted second part, and converted third part of the light beam (LB) scattered, diffracted, and/or reflected from the object (2); and

a distance determination unit configured to determine a phase difference between the primary modulation signal and the detected optical signal power of each converted first part, converted second part, and converted third part, wherein the distance determination unit is configured to determine the distance to the object (2) based on the determined phase difference.

2. Device (100) according to claim 1, wherein the distance determination unit is configured to determine the distance to the object (2) by:

   determining a total distance travelled of the light beam (LB) between the emission unit (1) and the detection unit (4) based on the determined phase difference, and
   determining the distance to the object (2) based on the determined total distance travelled.

3. Device (100) according to claims 1 or 2, wherein the emission unit (1) is arranged at a first location,

   wherein the detection unit (4) is arranged at a second location,
   wherein the distance determination unit is configured to determine an adjusted distance to the object (2) based on the determined distance to the object (2), the first position, and the second position.

4. Device (100) according to claim 3, wherein the emission unit (1) and the detection unit (4) are mounted on a substantially planar substrate,

   wherein the emission unit (1) and the detection unit (4) are separated by a first length along the substrate,
   wherein the distance determination unit is configured to determine the adjusted distance to the object (2) based on the determined distance to the object (2) and the first length.

5. Device (100) according to one of the preceding claims, wherein the modulation unit (3) is configured to amplitude modulate the optical signal power of the scattered, diffracted, and/or reflected light beam (LB) between the object (2) and the detection unit (4).

6. Device (100) according to one of the preceding claims, wherein the modulation unit (3) further comprises one or more fourth modulation sub-units (34), wherein each fourth modulation sub-unit (34) is configured to convert one fourth part of the light beam (LB) into one converted fourth part of the light beam (LB) by additionally amplitude modulating an optical power of the respective fourth part according to a fourth modulation signal, wherein the fourth modulation signal is obtained by phase shifting the primary modulation signal by a fixed fourth additional phase shift value,

   wherein the fixed first additional phase shift value, the fixed second additional phase shift value, the fixed third additional phase shift value, and the fixed fourth additional phase shift value are different from one another,
   wherein the detection unit (4) is configured to detect an optical signal power of each converted first part, converted second part, converted third part, and converted fourth part of the light beam (LB) scattered, diffracted, and/or reflected from the object (2); and
   wherein the distance determination unit is configured to determine the phase difference between the modulation signal and the detected optical signal power of each converted first part, converted second part, converted third part, and converted fourth part.

7. Device (100) according to claim 6, wherein the fixed first additional phase shift value is 0°, the fixed second additional phase shift value is 90°, the fixed third additional phase shift value is 180°, and the fixed fourth additional phase shift value is 270°.

8. Device (100) according to one of claims 6 to 7, wherein each of the one or more first modulation sub-units (31), one or more second modulation sub-units (32), one or more third modulation sub-units (33), and one or more fourth modulation sub-units (34) is an electro-absorption modulator.

9. Device (100) according to one of claims 6 to 8, wherein the modulation unit (3) comprises one first modulation sub-unit (31), one second modulation sub-unit (32), one third modulation sub-unit (33), and one fourth modulation sub-unit (34),

wherein each of the first modulation sub-unit (31), second modulation sub-unit (32), third modulation sub-unit (33), and fourth modulation sub-unit (34) is configured to generate a respective image of the object (2) on a separate section of the detection unit (4).

10. Device (100) according to one of claims 6 to 8, wherein the modulation unit (3) comprises a plurality of modulation arrays,

wherein each modulation array is a 2x2 array of one first modulation sub-unit (31), one second modulation sub-unit (32), one third modulation sub-unit (33), and one fourth modulation sub-unit (34),
wherein the modulation unit (3) is arranged proximal to the detection unit (4) such that each one of the first modulation sub-units (31), second modulation sub-units (32), third modulation sub-units (33), and fourth modulation sub-units (34) corresponds to one sensor pixel of the detection unit (4), respectively.

11. Device (100) according to 6 to 8, wherein the modulation unit (3) comprises P modulation stripe arrays,

wherein each modulation stripe array is a 4x1 array of one first modulation sub-unit (31), one second modulation sub-unit (32), one third modulation sub-unit (33), and one fourth modulation sub-unit (34),
wherein the modulation unit (3) is a Px1 array of the modulation stripe arrays.

12. Device (100) according to claim 11, wherein the Px1 array of the modulation stripe arrays is rotated by a rotation angle with respect to the detection unit (4).

13. Device (100) according to claim 12, wherein the distance determination unit is configured to perform:

a Fourier transform of an image of the detected optical signal power of the light beam (LB) scattered, diffracted, and/or reflected from the object (2), wherein the image is detected by the detection unit (4);
isolation and centring of image information from the Fourier transform of the image; and
an inverse Fourier transform of the isolated and centred image information to determine the phase difference information.

14. Device (100) according to one of the preceding claims, further comprising a filter unit, wherein the filter unit is configured to filter out electromagnetic radiation having a wavelength outside of the wavelength range of the emission unit (1).

15. Method (300) for determining a distance to an object (2), comprising:

emitting a light beam (LB) towards the object (2), wherein the light beam (LB) is amplitude modulated so as to have an amplitude modulated optical signal power according to the primary modulation signal;
converting one first part of the light beam (LB) into one converted first part of the light beam (LB) by additionally amplitude modulating an optical power of the respective first part according to a first modulation signal, wherein the first modulation signal is obtained by phase shifting the primary modulation signal by a fixed first additional phase shift value;
converting one second part of the light beam (LB) into one converted second part of the light beam (LB) by additionally amplitude modulating an optical power of the respective second part according to a second modulation signal, wherein the second modulation signal is obtained by phase shifting the primary modulation signal by a fixed second additional phase shift value;
converting one third part of the light beam (LB) into one converted third part of the light beam (LB) by additionally amplitude modulating an optical power of the respective third part according to a third modulation signal, wherein the third modulation signal is obtained by phase shifting the primary modulation signal by a fixed third additional phase shift value,
wherein the fixed first additional phase shift value, the fixed second additional phase shift value, and the fixed third additional phase shift value are different from one another;
detecting an optical signal power of each converted first part, converted second part, and converted third part of the light beam (LB) scattered, diffracted, and/or reflected from the object (2); and
determining a phase difference between the primary modulation signal and the detected optical signal power of each converted first part, converted second part, and converted third part; and determining the distance to the object (2) based on the determined phase difference.

Figure 1

Transmission in %

Figure 2A

## 2x2 Modulator

Figure 2B

Figure 3

EP 4 215 937 A1

Figure 4

10A    10B    11

12

31

MD₁    MD₂
φ = 0°    φ = 90°

32

50

13

33

34

MD₄    MD₃
φ = 270°    φ = 180°

10C

10D

Figure 5A

Figure 5B

10K

10I

11

Inv
φ = 180°

MD$_1$
φ = 0°

33

31

12

50

13

34

32

Inv
φ = 270°

MD$_2$
φ = 90°

10L

10J

Figure 5C

Top View

Side View

Figure 6

Top view

200

26    27                          18                    28      17

Side View                                                  10

21

22          18                    V1 V2                23

20

24          25    29    31-34                  19

Figure 7

50

| p/n section |
|---|
| i section |
| n/p section |

n/p substrate

**Figure 8A**

50

| p/n section |
|---|
| i section |
| n/p section |

i substrate

**Figure 8B**

Figure 9

Figure 10

CA1

3

S

CA2

Figure 11A

Figure 11B

EP 4 215 937 A1

Figure 11C

40B 41 42 43 44

51 46 52 46 53 46 54 46

Figure 11D

300

S1

Emitting light beam

S2A                                                                S2B

                                                                   S2C

| Converting 1st part | Converting 2nd part | Converting 3rd part |

S2

S3

Detecting optical signal power

S4

Determining phase difference

S5

Determining distance to object

Figure 12

Figure 13

Europäisches
Patentamt

European
Patent Office

Office européen
des brevets

# EUROPEAN SEARCH REPORT

Application Number

EP 22 15 3107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 995 191 B1 (SANDUSKY JOHN V [US]) 9 August 2011 (2011-08-09) | 1,2,5-9, 14,15 | INV. G01S7/4915 G01S17/894 |
| Y | * column 3, line 25 - column 4, line 41; | 3,4 | |
| A | figure 3 * | 10-13 | |
|   | * column 6, lines 19-38 * | | |
|   | * column 9, lines 1-16 * | | |
|   | ----- | | |
| Y | US 2021/176445 A1 (WANG HAO-JEN [CN] ET AL) 10 June 2021 (2021-06-10) * paragraphs [0027] - [0042]; claim 1; figures 2,6 * | 3,4 | |
|   | ----- | | |
| A | DE 10 2017 006846 A1 (UNIVERSITÄT ULM INST FÜR OPTOELEKTRONIK [DE]) 25 January 2018 (2018-01-25) * abstract * | 1-9,14, 15 | |
|   | ----- | | |
| A | US 2017/234985 A1 (KADAMBI ACHUTA [US] ET AL) 17 August 2017 (2017-08-17) * paragraphs [0003] - [0006], [0112] - [0118], [0142] - [0146]; figure 10 * | 10-13 | TECHNICAL FIELDS SEARCHED (IPC) G01S |
|   | ----- | | |

The present search report has been drawn up for all claims

| Place of search | Date of completion of the search | Examiner |
|---|---|---|
| Munich | 16 September 2022 | Grübl, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

**EP 22 15 3107**

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

**see sheet B**

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 22 15 3107

The Search Division considers that the present European patent application does not comply with the requirements of unity of invention and relates to several inventions or groups of inventions, namely:

**1. claims: 1-9, 14, 15**

> The emission unit is arranged at a first location,wherein the detection unit is arranged at a second location,wherein the distance determination unit is configured to determine an adjusted distance to the object based on the determined distance to the object, the first position, and the second position.
> ---

**2. claims: 10-13**

> The modulation unit comprises a plurality of modulation arrays, wherein each modulation array is an array of one first modulation sub-unit, one second modulation sub-unit, one third modulation sub-unit, and one fourth modulation sub-unit.
> ---

# EP 4 215 937 A1

## ANNEX TO THE EUROPEAN SEARCH REPORT
## ON EUROPEAN PATENT APPLICATION NO.

EP 22 15 3107

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2022

| Patent document cited in search report | | Publication date | Patent family member(s) | | Publication date |
|---|---|---|---|---|---|
| US 7995191 | B1 | 09-08-2011 | NONE | | |
| US 2021176445 | A1 | 10-06-2021 | CN | 111095914 A | 01-05-2020 |
| | | | EP | 3859395 A1 | 04-08-2021 |
| | | | US | 2021176445 A1 | 10-06-2021 |
| | | | WO | 2021109138 A1 | 10-06-2021 |
| DE 102017006846 | A1 | 25-01-2018 | DE | 102017006846 A1 | 25-01-2018 |
| | | | WO | 2018015507 A1 | 25-01-2018 |
| US 2017234985 | A1 | 17-08-2017 | NONE | | |

For more details about this annex : see Official Journal of the European Patent Office, No. 12/82